# EUROPEAN PATENT APPLICATION

(11) **EP 4 819 659 A1**
(43) Date of publication of application: **07.10.2026**
(21) Application number: 24910923.2
(22) Date of filing: 19.12.2024
(51) Int. Cl.: H04W 12/06

(54) **COMMUNICATION METHOD AND APPARATUS**

(30) Priority: 28.12.2023 CN 202311862415
(71) Applicant: Huawei Technologies Co., Ltd., Shenzhen, Guangdong 518129 (CN)
(72) Inventor: GUO, Yanfei, Shenzhen, Guangdong 518129 (CN); WU, Yizhuang, Shenzhen, Guangdong 518129 (CN)
(74) Representative: MERH-IP Matias Erny Reichl Hoffmann Patentanwälte PartG mbB
(86) International application number: PCT/CN2024/140605
(87) International publication number: WO 2025/139994

(57) **Abstract**

This application provides a communication method and apparatus, relating to the field of communication technologies. A terminal obtains a first identifier and a first long-term key of the terminal, and the terminal may trigger mutual authentication by sending, to a network, a first message that carries a second identifier determined based on the first identifier, so that the network can determine, based on the second identifier, a second long-term key that is symmetric to the first long-term key of the terminal, and authenticate the terminal based on the second long-term key. The terminal may generate a random number based on the first identifier, and authenticate the network based on the first long-term key, first authentication data from the network, and the random number. The terminal and the network perform the mutual authentication by using symmetric keys, requiring no complex calculation. Further, in a process of the mutual authentication between the terminal and the network, the random number for the mutual authentication is generated based on the first identifier, and the random number does not need to be carried during signaling exchange in the mutual authentication between the network and the terminal, so that mutual authentication efficiency can be further improved, and signaling resources can be saved.

## Description

### CROSS-REFERENCE TO RELATED APPLICATIONS

This application claims priority to Chinese Patent Application No. 202311862415.5, filed with the China National Intellectual Property Administration on December 28, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a mobile communication network, user equipment (user equipment, UE) performs mutual authentication with a network side based on subscription data in a subscriber identity module (subscriber identity module, SIM) or a universal subscriber identity module (universal subscriber identity module, USIM), to obtain authorization for accessing a network. Regardless of the authentication method employed, the network side needs to obtain a permanent identifier of the UE, to obtain a corresponding long-term key K based on the permanent identifier, so as to perform an authentication procedure.

However, if the permanent identifier is directly sent in plaintext, the permanent identifier of the user will be exposed, compromising user privacy. Therefore, in a 5th generation (a 5th generation, 5G) network, an encryption mechanism for a permanent identifier of a user is introduced. When the user performs registration for the first time, permanent identifier information of the user is encrypted, to ensure security of the permanent identifier information of the user. However, existing approaches of encrypting the permanent identifier information of the user require an asymmetric encryption mechanism with high communication and calculation overheads, which may be unaffordable for terminals with limited capabilities.

### SUMMARY

This application provides a communication method and apparatus, to protect security of user identity information.

According to a first aspect, this application provides a communication method. The method may be applied to a terminal or a chip of the terminal. This is not specifically limited herein. The terminal may be a mobile phone, a vehicle-mounted device, an internet of things device, or the like. The method is performed as follows:
obtaining a first identifier of the terminal and a first long-term key of the terminal; sending a first message, where the first message is used to trigger mutual authentication, the first message includes a second identifier of the terminal, the second identifier is used to determine a second long-term key used to authenticate the terminal in the mutual authentication, the second identifier is determined based on the first identifier, and the second long-term key and the first long-term key are keys symmetric with each other; receiving first authentication data; and authenticating a network in the mutual authentication based on a random number, the first long-term key, and the first authentication data, where the random number is generated based on the first identifier.

The foregoing mutual authentication may be understood as mutual authentication between an identity of the terminal and an identity of the network, for example, primary authentication. The first identifier may be a random sequence code in a SIM or USIM configuration parameter, or a sequence code that complies with a user identity format in a mobile communication network. The first identifier may further include a network identifier, for example, a public land mobile network (public land mobile network, PLMN) identifier. How to construct the first identifier is not specifically limited herein. The first identifier may be updated with a number of times of the mutual authentication. For example, a first identifier corresponding to an X^{th} primary authentication between the terminal and the network is an identifier A, a first identifier corresponding to an (X+1)^{th} primary authentication between the terminal and the network is an identifier B, and the identifier A is different from the identifier B. Optionally, the terminal may obtain the first identifier from the SIM or USIM configuration parameter of the terminal. Alternatively, after the mutual authentication between the terminal and the network succeeds, a network-side device generates a new first identifier and sends the new first identifier to the terminal. After storing the new first identifier, the terminal reads the first identifier from a storage position (for example, a SIM, a USIM, or an ME) of the new first identifier. How the terminal obtains the first identifier is not specifically limited herein.

In addition, the terminal may determine the second identifier based on the first identifier. For example, the first identifier is encrypted to obtain the second identifier; or the first identifier and the first long-term key of the terminal are encrypted to obtain the second identifier. How to determine the second identifier based on the first identifier is not specifically limited herein.

In this application, the terminal may trigger the mutual authentication by sending, to the network, the first message that carries the second identifier, so that the network can determine, based on the second identifier, the second long-term key that is symmetric to the first long-term key of the terminal, and authenticate the terminal based on the second long-term key. The terminal may generate the random number based on the first identifier, and authenticate the network based on the first long-term key, the first authentication data from the network, and the random number. The terminal and the network perform mutual authentication by using the symmetric keys, requiring no complex calculation, and simplifying processing logic. This is affordable for terminals with limited capabilities.

In a process of the mutual authentication between the terminal and the network, the random number is further used. In this application, the random number for the mutual authentication is generated based on the first identifier, and the random number does not need to be carried during signaling exchange in the mutual authentication between the network and the terminal, so that mutual authentication efficiency can be further improved, and signaling resources can be saved.

In an optional manner, the terminal further receives an encrypted ciphertext, and decrypts the encrypted ciphertext by using a communication key, to obtain a third identifier of the terminal, where the communication key is derived from the first long-term key, and the third identifier is used to generate a message for subsequently triggering the mutual authentication by the terminal. Further, the terminal may store the third identifier.

In this application, the terminal may update the first identifier based on the third identifier. When the terminal and the network device perform mutual authentication again, the terminal may determine a new second identifier based on an updated first identifier. Based on this, the second identifier in the first message varies with each mutual authentication. Even if the second identifier is stolen, identity information of the terminal cannot be obtained, thereby ensuring security of the identity information of the terminal. Therefore, the message that is sent by the terminal and that is used to trigger the mutual authentication may not include a permanent identifier of the terminal, but include the second identifier determined based on the updated first identifier. Even if an attacker obtains the second identifier in the first message, the attacker cannot decipher the identity of the terminal.

In an optional manner, the first message further includes second authentication data for authenticating the terminal.

In this application, the terminal directly includes, in the first message, the second authentication data for authenticating the terminal, so that the network directly authenticates the terminal, thereby improving mutual authentication efficiency.

In an optional manner, the terminal further sends an acknowledgment message indicating that the terminal has successfully received the third identifier, so that the network-side device determines that the terminal side has received the third identifier, and may also store the third identifier.

In an optional manner, the encrypted ciphertext is received by using a terminal parameter update procedure.

In this application, the terminal receives the encrypted ciphertext by reusing the existing terminal parameter update procedure, so that data processing efficiency can be improved.

In an optional manner, the terminal further sends the acknowledgment message indicating that the third identifier is successfully received, so that the network-side device determines a timing for storing the third identifier.

In an optional manner, the second identifier is determined based on one of the following parameter combinations:
the first identifier; the first identifier and the first long-term key; or the first identifier, the first long-term key, and a count value, where the count value indicates a number of times that the terminal has triggered the mutual authentication.

In this application, the second identifier may be determined based on the first identifier. For example, the first identifier is reused as the second identifier, or the first identifier is encrypted to determine the second identifier. This manner is simple and convenient. The second identifier may alternatively be determined based on the first identifier and the first long-term key, for example, determined by performing an encryption operation or a hash operation on the first identifier and the first long-term key. The second identifier may alternatively be determined based on the first identifier, the first long-term key, and the count value indicating the number of times of triggering the mutual authentication by the terminal, for example, determined by performing an encryption operation or a hash operation on the first identifier, the long-term key, and the count value.

According to a second aspect, this application provides a communication method. The method may be applied to a network-side device or a chip of the network-side device. This is not specifically limited herein. The network-side device may include unified data management (unified data management, UDM), an authentication server function (authentication server function, AUSF), a security anchor function (security anchor function, SEAF), and/or an authentication credential repository and a processing function (authentication credential repository and processing function, ARPF). The network-side device may be one of the network elements, a plurality of network elements, or a device in which a plurality of network elements are co-located. This is not specifically limited herein. The method is performed as follows:
receiving a second identifier of a terminal; determining, based on the second identifier, a first identifier of the terminal and a second long-term key used to authenticate the terminal in mutual authentication, where the second long-term key and the first long-term key of the terminal are keys symmetric with each other; determining verification data based on the second long-term key and a random number, where the verification data is used to authenticate the terminal in the mutual authentication, and the random number is determined based on the first identifier; determining, based on the second long-term key and the random number, first authentication data used to authenticate a network in the mutual authentication; and sending the first authentication data, where specifically, the foregoing steps may be performed by using the UDM or the ARPF.

In an optional manner, second authentication data for authenticating the terminal is received; and the terminal is authenticated based on the verification data and the second authentication data. Specifically, the UDM/AUSF may receive the second authentication data, and the AUSF authenticates the terminal based on the verification data and the second authentication data. This is not specifically limited in this application.

In an optional manner, receiving the second authentication data for authenticating the terminal includes: The authentication server function (for example, the AUSF) receives an authentication request message, where the authentication request message carries the second authentication data and the second identifier of the terminal; and the authentication server function (for example, the AUSF) stores the second authentication data, and sends the second identifier of the terminal to the unified data management function (for example, the UDM or the ARPF). Receiving the second identifier of the terminal includes: The unified data management function (for example, the UDM or the ARPF) receives the second identifier of the terminal from the authentication server function (for example, the AUSF). Determining the first identifier of the terminal and the second long-term key based on the second identifier, and determining the verification data based on the second long-term key and the random number includes: The unified data management function (for example, the UDM or the ARPF) determines the first identifier of the terminal and the second long-term key based on the second identifier, and determines the verification data based on the second long-term key and the random number; and the unified data management function (for example, the UDM or the ARPF) sends the verification data to the authentication server function (for example, the AUSF). Authenticating the terminal based on the verification data and the second authentication data includes: The authentication server function (for example, the AUSF) authenticates the terminal based on the verification data and the second authentication data.

In an optional manner, receiving the second authentication data for authenticating the terminal includes: The authentication server function (for example, the AUSF) receives an authentication request message, where the authentication request message carries the second authentication data and the second identifier of the terminal. The method further includes: sending the second identifier of the terminal and the second authentication data to the unified data management function (for example, the UDM or the ARPF). Receiving the second identifier of the terminal includes: The unified data management function receives the second identifier of the terminal and the second authentication data that are from the authentication server function (for example, the UDM or the ARPF). Determining the first identifier of the terminal and the second long-term key based on the second identifier, and determining the verification data based on the second long-term key and the random number includes: The unified data management function (for example, the UDM or the ARPF) determines the first identifier of the terminal and the second long-term key based on the second identifier, and determines the verification data based on the second long-term key and the random number. Authenticating the terminal based on the verification data and the second authentication data includes: The unified data management function (for example, the UDM or the ARPF) authenticates the terminal based on the verification data and the second authentication data.

In an optional manner, determining the first authentication data based on the second long-term key and the random number, and sending the first authentication data includes: The unified data management function (for example, the UDM or the ARPF) determines the first authentication data based on the second long-term key and the random number, and sends the first authentication data to the terminal via the authentication server function.

In an optional manner, the security anchor function (for example, the SEAF) receives a first message, where the first message is used to trigger the mutual authentication, and the first message includes the second identifier of the terminal and the second authentication data; and the security anchor function sends the authentication request message to the authentication server function.

In an optional manner, when the terminal is successfully authenticated, a third identifier is generated, where the third identifier is used to generate a message for subsequently triggering the mutual authentication by the terminal; the third identifier is encrypted by using a communication key to obtain an encrypted ciphertext, where the communication key is derived from the second long-term key; and the encrypted ciphertext is sent.

In an optional manner, the network-side device further stores the third identifier.

In an optional manner, before the third identifier is stored, acknowledgment information indicating that the terminal has successfully received the third identifier is received.

In an optional manner, the encrypted ciphertext is sent by using a terminal parameter update procedure.

According to a third aspect, this application provides a communication method. The method may be applied to a terminal or a chip of the terminal. This is not specifically limited herein. The terminal may be a mobile phone, a vehicle-mounted device, an internet of things device, or the like. The method is performed as follows:
obtaining a first key identifier of the terminal, where the first key identifier indicates a first long-term key of the terminal; generating a communication key based on the first key identifier and the first long-term key; determining a subscription concealed identifier, where the subscription concealed identifier includes a first encrypted ciphertext and the first key identifier, and the first encrypted ciphertext is obtained by encrypting a first subscription permanent identifier of the terminal by using the communication key; and sending the subscription concealed identifier.

In this application, the terminal generates the communication key based on the first key identifier and the first long-term key, and encrypts, based on the communication key, the first subscription permanent identifier preconfigured in the terminal, to obtain the first encrypted ciphertext. Then, the first encrypted ciphertext and the first key identifier are sent to a network side as content of the subscription concealed identifier, so that the network side determines a second long-term key and can verify the first subscription permanent identifier. In this manner, the terminal and the network side perform encryption and decryption by using symmetric (same) communication keys, so that data processing complexity of subscription permanent identifier encryption can be reduced.

Specifically, the first key identifier is used to determine the second long-term key on the network side, and the second long-term key and the first long-term key are keys symmetric with each other.

In an optional manner, the terminal further receives a second encrypted ciphertext, and decrypts the second encrypted ciphertext by using the communication key, to obtain a second key identifier of the terminal, where the second key identifier is used to generate a subscription concealed identifier to subsequently access a network by the terminal. Further, the terminal may store the second key identifier.

In this application, the terminal may update the first key identifier based on the second key identifier. When accessing the network again, the terminal may determine a communication key based on the second key identifier and the first long-term key, and encrypt the first subscription permanent identifier based on the communication key. The communication key is different from the communication key determined based on the first key identifier and the first long-term key. Based on this, each time the network is accessed, a first encrypted ciphertext encrypted by using a communication key in the subscription concealed identifier varies. Even if the subscription concealed identifier is stolen, identity information of a user cannot be decrypted, thereby ensuring security of the identity information of the user.

In an optional manner, the terminal further sends an acknowledgment message indicating that the second key identifier is successfully received, so that the network-side device determines a timing for storing the second key identifier.

In an optional manner, the second encrypted ciphertext is received by using a terminal parameter update procedure.

In this application, the terminal receives the second encrypted ciphertext by reusing the existing terminal parameter update procedure, so that data processing efficiency can be improved.

According to a fourth aspect, this application provides a communication method. The method may be applied to a network-side device or a chip of the network-side device. The network-side device may include UDM, an AUSF, an SEAF, and/or an ARPF. The network-side device may be one of the network elements, a plurality of network elements, or a device in which a plurality of network elements are co-located. This is not specifically limited herein. The method is performed as follows:
receiving a subscription concealed identifier of a terminal, where the subscription concealed identifier includes a first encrypted ciphertext and a first key identifier; determining a second long-term key and a preconfigured second subscription permanent identifier of the terminal based on the first key identifier, where the second long-term key and a first long-term key of the terminal are keys symmetric with each other; decrypting the first encrypted ciphertext based on a communication key, to obtain a first subscription permanent identifier of the terminal, where the communication key is derived from the second long-term key; and authenticating the terminal based on the first subscription permanent identifier and the second subscription permanent identifier.

In an optional manner, a second key identifier is generated when the terminal is successfully authenticated, where the second key identifier is used to generate a subscription concealed identifier to subsequently access a network by the terminal; the second key identifier is encrypted by using the communication key, to obtain a second encrypted ciphertext; and the second encrypted ciphertext is sent.

In an optional manner, the second key identifier is stored.

In an optional manner, before the second key identifier is stored, acknowledgment information indicating that the terminal has successfully received the second key identifier is received.

In an optional manner, the second encrypted ciphertext is sent by using a terminal parameter update procedure.

According to a fifth aspect, an embodiment of this application provides a communication apparatus. The communication apparatus may be a terminal (for example, the terminal in the first aspect (or the third aspect) or a chip disposed inside the terminal), or may be a network-side device (for example, the network-side device in the second aspect (or the fourth aspect) or a chip disposed inside the network-side device). The communication apparatus has a function of implementing the first aspect to the fourth aspect. For example, the communication apparatus includes a corresponding module, unit, or means (means) for performing steps in the first aspect to the fourth aspect. The function, unit or means may be implemented by software, may be implemented by hardware, or may be implemented by hardware executing corresponding software.

In a possible design, the communication apparatus includes a processing unit and a transceiver unit. The transceiver unit may be configured to receive and send signals, to implement communication between the communication apparatus and another apparatus. For example, the transceiver unit is configured to receive a first message. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to receive and send signals, and the processor executes program instructions, to complete the method in any possible design or implementation of the first aspect to the fourth aspect. The communication apparatus may further include one or more memories. The memory is configured to be coupled to the processor, and the memory may store a necessary computer program or necessary instructions for implementing the functions in the first aspect. The processor may execute the computer program or the instructions stored in the memory. When the computer program or the instructions are executed, the communication apparatus is caused to implement the method in any possible design or implementation of the first aspect to the fourth aspect.

In still another possible design, the communication apparatus includes a processor. The processor may be configured to be coupled to a memory. The memory may store a necessary computer program or necessary instructions for implementing the functions in the first aspect to the fourth aspect. The processor may execute the computer program or the instructions stored in the memory. When the computer program or the instructions are executed, the communication apparatus is caused to implement the method in any possible design or implementation of the first aspect to the fourth aspect.

In still another possible design, the communication apparatus includes a processor and an interface circuit. The processor is configured to communicate with another apparatus through the interface circuit, and perform the method in any possible design or implementation of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and one or more memories. The memory may be integrated with the processor, or the memory and the processor are separately disposed. In a specific implementation process, the memory and the processor may be integrated into one chip, or may be separately disposed on different chips. A type of the memory and a manner in which the memory and the processor are disposed are not limited in this embodiment of this application.

According to a sixth aspect, an embodiment of this application provides a communication system. The communication system includes the terminal and the network-side device.

According to a seventh aspect, this application provides a chip system. The chip system includes a processor, and may further include a memory, configured to implement the methods according to the first aspect to the fourth aspect. The chip system may include a chip, or may include a chip and another discrete component.

According to an eighth aspect, this application further provides a computer-readable storage medium. The computer-readable storage medium stores computer-readable instructions. When the computer-readable instructions are executed by a computer, the computer is caused to perform the methods according to the first aspect to the fourth aspect.

According to a ninth aspect, this application provides a computer program product including instructions. When the computer program product runs on a computer, the computer is caused to perform the methods in embodiments of the first aspect to the fourth aspect.

For technical effects that can be achieved in the second aspect to the ninth aspect, refer to descriptions of technical effects that can be achieved in the corresponding possible design solutions in the first aspect. Details are not described herein again in this application.

### BRIEF DESCRIPTION OF DRAWINGS

FIG. 1 is a diagram of a 5G network architecture according to an embodiment of this application;
FIG. 2 is a diagram of a structure of an SUCI;
FIG. 3A is a diagram of 5G key derivation;
FIG. 3B is a diagram of a UPU procedure;
FIG. 4A is a schematic flowchart of a communication method according to an embodiment of this application;
FIG. 4B(a) and FIG. 4B(b) are a schematic flowchart of a communication method according to an embodiment of this application;
FIG. 5A and FIG. 5B are a schematic flowchart of a communication method according to an embodiment of this application;
FIG. 6A and FIG. 6B are a schematic flowchart of a communication method according to an embodiment of this application;
FIG. 7A and FIG. 7B are a schematic flowchart of a communication method according to an embodiment of this application;
FIG. 8A is a schematic flowchart of a communication method according to an embodiment of this application;
FIG. 8B(a) and FIG. 8B(b) are a schematic flowchart of a communication method according to an embodiment of this application;
FIG. 9 is a diagram of a structure of a SUCI according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more. Therefore, for implementations of the apparatus and the method, reference may be made to each other, and repeated parts are not described again.

The technical solutions provided in embodiments of this application may be applied to a 5G system, or applied to a future communication system or another similar communication system. In addition, the technical solutions provided in embodiments of this application may be applied to a cellular link, a public land mobile network (public land mobile network, PLMN), a machine-to-machine (machine-to-machine, M2M) network, an internet of things (internet of things, IoT) network, or another network. The technical solutions may also be applied to a link between devices, for example, a device-to-device (device-to-device, D2D) link. The D2D link may also be referred to as a sidelink (sidelink), and the sidelink may also be referred to as a side-link, a secondary link, or the like. In embodiments of this application, the foregoing terms each mean a link established between devices of a same type, and have a same meaning. The link between the devices of the same type may be a link between terminal devices, a link between base stations, a link between relay nodes, or the like. This is not limited in embodiments of this application. For the link between the terminal devices, there is a D2D link defined in the 3rd generation partnership project (third generation partnership project, 3GPP) release (Release, Rel)-12/13, and there is also a V2X link that is between vehicles, between a vehicle and a mobile phone, or between a vehicle and any entity and that is defined by 3GPP for an internet of vehicles, including Rel-14/15. A V2X link based on a new radio (new radio, NR) system in Rel-18 and subsequent releases is further included.

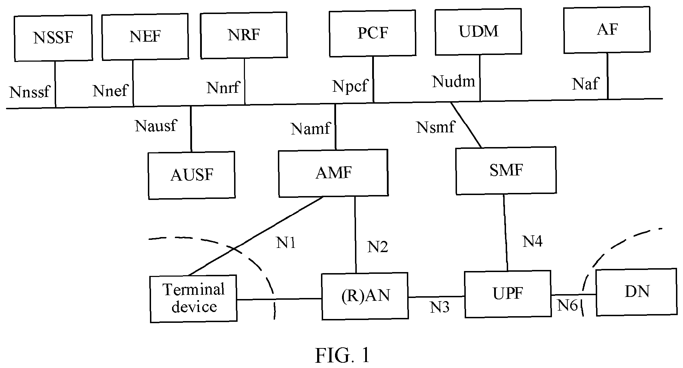

FIG. 1 is a diagram of a 5G network architecture applicable to this application. The 5G network architecture shown in FIG. 1 may include three parts: a terminal device part, a data network (data network, DN) part, and an operator network part. The following briefly describes functions of a part of network elements in the architecture.

The operator network may include one or more of the following network elements: an authentication server function (authentication server function, AUSF), a network exposure function (network exposure function, NEF), a policy control function (policy control function, PCF), unified data management (unified data management, UDM), a unified data repository (unified data repository, UDR), a network repository function (network repository function, NRF), an access and mobility management function (access and mobility management function, AMF), a session management function (session management function, SMF), an access network, a user plane function (user plane function, UPF), and the like. In the operator network, a part other than a radio access network part may be referred to as a core network part. In a possible implementation method, the operator network further includes an application function (application function, AF). Alternatively, the AF may not belong to the operator network, but belongs to a third party.

A terminal device (terminal device), which may also be referred to as user equipment (user equipment, UE), is a device having a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in autonomous driving (autonomous driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the operator network through an interface (for example, N1) provided by the operator network, and use services such as data and/or voice provided by the operator network. The terminal device may further access the DN through the operator network, and use an operator service deployed on the DN and/or a service provided by the third party. The third party may be a service party other than the operator network and the terminal device, and may provide services such as data and/or voice for the terminal device. A specific representation form of the third party may be specifically determined based on an actual application scenario, and is not limited herein.

The core network part includes a user plane function and a control plane function.

The user plane function includes the UPF. As an interface to the data network, the UPF completes functions such as forwarding of user plane data (for example, a data packet), quality of service (quality of service, QoS) control, session/flow-level charging statistics collection, and bandwidth limiting.

The control plane function is mainly for user registration and authentication, mobility management, delivery of a data packet forwarding policy and a QoS control policy to the user plane function, and the like. The control plane function may further include another network element other than the UPF, for example, the AMF and the SMF.

The AMF mainly performs functions such as a registration procedure during user access and location management and access authentication/authorization in a user movement process. In addition, the AMF is further responsible for transferring a user policy between the terminal device and the PCF. A connection between the terminal device and the AMF may be referred to as a non-access stratum (non-access stratum, NAS) connection, and a message whose transmission is performed between the terminal device and the AMF is a NAS message.

The SMF mainly establishes a corresponding session connection when a user initiates a service, and provides a specific service for the user, for example, delivers a data packet forwarding policy, a QoS policy, and the like to the UPF through an NG4 interface between the SMF and the UPF.

The AUSF is mainly responsible for authenticating the user, and determining validity of the terminal device, to determine whether to allow the terminal device to access a network.

The UDM is mainly responsible for functions such as storage of subscription data of the terminal device and user access authorization.

The UDR is mainly responsible for functions of storing and accessing type data such as subscription data, policy data, application data, and the like.

The PCF is mainly responsible for delivering a service-related policy to the AMF or the SMF.

The NEF is mainly configured to support capability and event exposure.

The AF mainly transfers a requirement of an application side on a network side to the PCF, so that the PCF generates a corresponding policy. The AF may be a third-party functional entity, or may be an operator-deployed application service, for example, an internet protocol (internet protocol, IP) multimedia subsystem (IP Multimedia Subsystem, IMS) voice call service.

The NRF may be configured to provide a network element discovery function, and provide, based on a request of another network element, network element information corresponding to a network element type. The NRF further provides network element management services, for example, network element registration, update, and deregistration, and network element status subscription and push.

The DN is a network located outside the operator network. The operator network may access a plurality of DNs, and a plurality of services may be deployed on the DN, to provide services such as data and/or voice for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transfer collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Nnssf, Nausf, Nnef, Nnrf, Npcf, Nudm, Naf, Namf, Nsmf, N1, N2, N3, N4, and N6 are interface sequence numbers. For meanings of the interface sequence numbers, refer to meanings defined in a 3GPP protocol. This is not limited herein.

It may be understood that the foregoing network elements or functions may be network elements in a hardware device, or may be software functions running on dedicated hardware or virtualized functions instantiated on a platform (for example, a cloud platform). Optionally, the foregoing network elements or functions may be implemented by one device, may be jointly implemented by a plurality of devices, or may be one functional module in one device. This is not specifically limited in embodiments of this application.

The access and mobility management function (which may also be referred to as a mobility management function), the authentication server function, and the unified data management in embodiments of this application may be respectively the AMF, the AUSF, and the UDM in FIG. 1, or may be network elements having functions of the AMF, the AUSF, and the UDM in a future communication network like a 6th generation (6th generation, 6G) network. This is not limited in embodiments of this application.

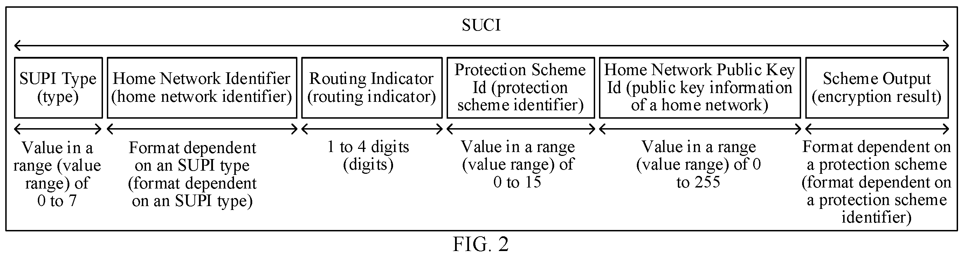

For ease of understanding embodiments of this application, the following first briefly describes terms or processing procedures in embodiments of this application.
(1) An SUCI is obtained by encrypting an SUPI of a terminal, and is used to protect identity information of a user. A data structure of the SUCI is shown in FIG. 2, and includes SUPI-type, Home Network Identifier, Routing Indicator, Protection Scheme Id, Home Network Public Key Id, and Scheme Output.

SUPI-type represents a type of the SUPI, includes a value in a range of 0 to 7, and identifies a type of the SUPI concealed in the SUCI. For an indication, refer to the following Table 1. For example, 0 indicates that the SUPI is of an IMSI type. In addition, this field can further be used to determine whether the SUPI is in an IMSI or NAI format.

**Table 1**

| Value of SUPI-type | SUPI type |
|---|---|
| 0 | IMSI |
| 1 | Network-specific identifier |
| 2 | Global line identifier (GLI) |
| 3 | Global cable identifier (GCI) |
| 4 to 7 | Spare values |

Home Network Identifier represents a home network identifier. When the type of the SUPI is IMSI, the home network identifier includes two parts:
a mobile country code (MCC), which consists of three decimal digits and uniquely identifying a country of domicile of a mobile subscription; and
a mobile network code (MNC), which consists of two or three decimal digits and identifying a home PLMN or an SNPN of the mobile subscription.

When the type of the SUPI is the network-specific identifier, the GLI, or the GCI, the home network identifier includes a string of characters with a variable length, representing a domain name as specified in clause 2.2 of IETF RFC 7542. For the GLI or the GCI, the domain name should correspond to a domain part specified in an NAI format for the SUPI.

Routing Indicator represents a routing indicator, including one to four decimal digits assigned by a home network operator and provisioned in a USIM, and allows together with the home network identifier to route network signaling with the SUCI to AUSF and UDM instances capable to serve the user. If no routing indicator is configured in the USIM or an ME, this data field should be set to 0.

Protection Scheme Id represents a protection scheme identifier used to encrypt the SUPI, and includes a value in a range of 0 to 15. Protection Scheme Id represents a null scheme or non-null scheme specified in Annex C of 3GPP TS 33.501 or a protection scheme specified by the HPLMN. If the type of the SUPI is the GLI or the GCI, the null scheme should be used. Currently, definitions of this value in 3GPP are as follows:
null-scheme (value: 0x0);
Profile <A> (value: 0x1); and
Profile <B> (value: 0x2).

Values 0x3 to 0xB are reserved for future standardized protection schemes, and values 0xC to 0xF are reserved for proprietary protection schemes specified by a home operator.

Home Network Public Key Id represents public key information of a home network, and includes a value in a range of 0 to 255. Home Network Public Key Id represents one of public key identifiers provisioned by the HPLMN or the SNPN, and identifies a network-side public key used to protect the SUPI. This data field should be set to a value 0 only when a null protection scheme is used.

Scheme Output represents a result of encrypting an MSIN part of IMSI or a username part of an NAI, and includes a string of characters with a variable length or hexadecimal digits. This specifically depends on a used protection scheme. Specifically, the ME uses, based on a protection scheme identifier and an ECC (elliptic curve cryptography) ephemeral public key newly generated based on a parameter specified by an ECIES algorithm, the temporary public key and a public key that is provisioned by the home network and that is stored in the USIM, to perform an operation according to an encryption operation defined in the ECIES specification in SEGE to obtain Scheme Output. Specifically, a secret value generated by using a key exchange algorithm is first used as an input of a key derivation function KDF, to generate a corresponding protection key. To be specific:
generating keying data K with a length of enckeylen+icblen+mackeylen; and
parsing the leftmost enckeylen octet of K as an encryption key EK, parsing the middle icblen octet of K as an ICB (an encryption input), and parsing the rightmost mackeylen octet of K as a MAC key MK, where a finally output Scheme Output is a concatenation of the ECC ephemeral public key (Eph. public key), a ciphertext value (Ciphertext value) generated by encrypting the SUPI by using EK, a MAC-tag value (MAC-tag value) generated by performing MAC calculation on the generated ciphertext value by using MK, and any other parameters.

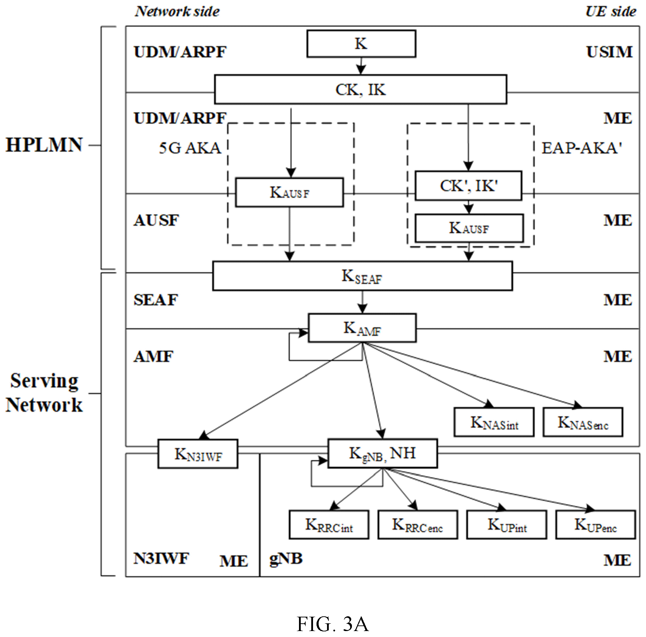

(2) 5G key derivation may be understood with reference to FIG. 3A. A key hierarchy includes the following keys: K (a terminal long-term key), CK, IK, an AUSF key (K_{AUSF}), an SEAF key (K_{SEAF}), an AMF key (K_{AMF}), a NAS integrity key (K_{NASint}), a NAS encryption key (K_{NASenc}), an N3IWF key (K_{N3IWF}), a gNB key (K_{gNB}), an RRC integrity key (K_{RRCint}), an RRC encryption key (K_{RRCenc}), a UP integrity key (K_{UPint}), and a UP encryption key (K_{UPenc}). The following uses a network side as an example.

In the HPLMN, a UDM derives the AUSF key based on CK and IK, and provides the AUSF key for an AUSF. The AUSF derives the SEAF key based on the AUSF key, and provides the SEAF key for an SEAF in a serving network.

In the serving network, the SEAF derives the AMF key based on the SEAF key, and provides the AMF key for an AMF.

The AMF derives the NAS integrity key and the NAS encryption key based on the AMF key. The NAS integrity key and the NAS encryption key may be used to protect a NAS message whose transmission is performed on a NAS connection between the AMF and the terminal device. In addition, the AMF may further derive the N3IWF key and the gNB key based on the AMF key, and provide the N3IWF key for an N3IWF. The N3IWF key is used to protect subsequent data traffic of non-3GPP access, and provide the gNB key and a next hop (next hop, NH) parameter for a gNB.

The gNB generates the RRC integrity key, the RRC encryption key, the UP integrity key, and the UP encryption key based on the gNB key and the NH parameter. The RRC integrity key and the RRC encryption key are used to protect an RRC message transmitted between the gNB and the terminal device. The UP integrity key and the UP encryption key are used to protect user plane data transmitted between the gNB and the terminal device.

Further, the NAS integrity key, the RRC integrity key, and the UP integrity key are all used to perform integrity protection on a message. The NAS encryption key, the RRC encryption key, and the UP encryption key are all used to perform encryption protection on a message.

The NAS integrity key and the NAS encryption key are used as an example.

When the AMF sends a downlink NAS message to the terminal device, the AMF and the terminal device may perform integrity protection on the downlink NAS message based on the NAS integrity key. Specifically, the AMF may generate, based on the NAS message and the NAS integrity key, a message authentication code (message authentication code, MAC) used to perform integrity protection on the NAS message, and send the NAS message and the MAC together to the terminal device. Correspondingly, the terminal device receives the MAC and the NAS message from the AMF, and performs integrity verification on the NAS message based on the MAC and the locally stored NAS integrity key. In addition, the AMF and the terminal device may further perform encryption protection on the downlink NAS message based on the NAS encryption key. Specifically, the AMF may encrypt the NAS message based on the NAS encryption key, to obtain an encrypted NAS message. Then, the AMF sends the encrypted NAS message to the terminal device. Correspondingly, the terminal device receives the encrypted NAS message from the AMF, and decrypts the encrypted NAS message based on the locally stored NAS encryption key.

Similarly, when the terminal device sends an uplink NAS message to the AMF, the terminal device and the AMF may perform integrity protection on the uplink NAS message based on the NAS integrity key, and perform encryption protection on the uplink NAS message based on the NAS encryption key. For details, refer to the foregoing descriptions that the AMF sends the downlink NAS message to the terminal device.

It may be understood that when transmission of the NAS message is performed between the AMF and the terminal device, both the integrity protection and the encryption protection may be performed, or one of the integrity protection and the encryption protection may be performed. In this application, the integrity protection and the encryption protection may be collectively referred to as security protection.

(3) Mutual authentication means that the terminal performs mutual authentication with the network side by using subscription data (for example, a long-term key K) in a (U) SIM card, to obtain authorization for accessing a network. 5G is used as an example. There are the following three mutual authentication methods: 5G-AKA (5G authentication and key agreement), EAP-AKA (extensible authentication protocol-authentication and key agreement), and EAP-TLS (extensible authentication protocol-TLS). In a 5G-AKA procedure, a home network authentication center provides a group of 5G authentication vectors and corresponding verification data HXRES* for a security anchor (SEAF) of an access network. After authenticating UE by using these parameters, the access network further needs to send an authentication response of the UE to the home network authentication center for further authentication, and then the home network sends an authentication result to the access network. In 5G, the foregoing mutual authentication may also be referred to as 5G primary authentication. For the foregoing authentication methods, refer to an existing protocol. Details are not described herein.

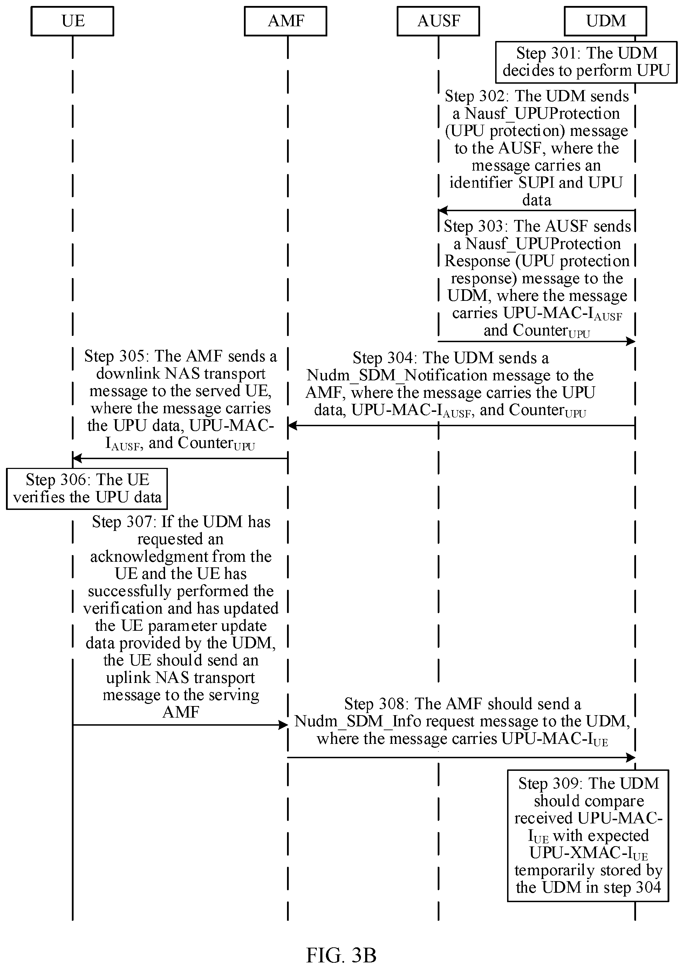

(4) A UE parameter update (UE parameter update) procedure, referred to as a UPU procedure for short, is a procedure triggered by the UDM after the UE is successfully authenticated and registers with a 3GPP system (for example, a 5G system). Refer to FIG. 3B for understanding. The following uses data exchange between the UE, the AMF, the AUSF, and the UDM as an example for description, and execution is as follows.

Step 301: The UDM decides to perform UPU.

Specifically, when the UE registers with the 5G system, the UDM decides to use a control plane procedure to perform the UPU. If a final consumer of to-be-updated UE parameters (for example, to-be-updated routing ID data) is the USIM, the UDM should use a secured packet mechanism to protect these parameters to update the parameters stored on the USIM. The UDM should then construct UE parameter update data (UPU data) by including parameters protected by the secured packet (if any), as well as any UE parameters for which a final consumer is the ME.

Step 302: The UDM sends a Nausf_UPUProtection (UPU protection) message to the AUSF, where the message carries an identifier SUPI and UPU data.

Specifically, the UDM should choose to initiate the foregoing invocation to the AUSF that holds latest K_{AUSF} of the UE. If deciding that the UE is to acknowledge successful security check of received UE parameter update data, the UDM should set a corresponding indication in the UE parameter update data, and include an ACK indication in a Nausf_UPUProtection service operation message, to indicate that UPU-XMAC-I_{UE} is needed (the UE performs MAC calculation on a UPU acknowledgment message), where UPU-XMAC-I_{UE} is derived based on K_{AUSF} with reference to an existing protocol, and details are not described herein.

Step 303: The AUSF sends a Nausf_UPUProtection Response (UPU protection response) message to the UDM, where the message carries UPU-MAC-I_{AUSF} (the AUSF performs MAC calculation on the UE parameter update data) and Counter_{UPU} (a counter of the UPU).

If the message from the UDM carries the ACK indication, the response message should further carry UPU-XMAC-I_{UE}. UPU-MAC-I_{AUSF} is derived based on K_{AUSF} with reference to the existing protocol, and details are not described herein.

Step 304: The UDM sends a Nudm_SDM_Notification (service data management notification (subscriber data management service data management, SDM)) message to the AMF, where the message carries the UPU data, UPU-MAC-I_{AUSF}, and Counter_{UPU}.

If the UDM sends the ACK indication, the AMF should temporarily store expected UPU-XMAC-I_{UE}.

Step 305: The AMF sends a downlink NAS transport message to the served UE, where the message carries the UPU data, UPU-MAC-I_{AUSF}, and Counter_{UPU}.

Step 306: The UE verify the UPU data.

Specifically, the UE may calculate, in a same manner as the AUSF, UPU-MAC-I_{AUSF} based on the received UE parameter update data and Counter_{UPU}, and verify whether UPU-MAC-I_{AUSF} matches a UPU-MAC-I_{AUSF} value received within a UPU transparent container in the downlink NAS transport message. If the verification of UPU-MAC-I_{AUSF} succeeds and the UPU data includes the parameters protected by the secured packet, the ME should forward the secured packet to the USIM. If the verification of UPU-MAC-I_{AUSF} succeeds and the UPU data includes any parameter that is not protected by the secured packet, the ME should update parameters stored in the ME by using received parameters in UDM update data.

Step 307: If the UDM has requested an acknowledgment from the UE, and the UE has successfully performed the verification and has updated the UE parameter update data provided by the UDM, the UE should send an uplink NAS transport message to the serving AMF.

Specifically, the UE should generate UPU-MAC-I_{UE}, and include the generated UPU-MAC-I_{UE} in the uplink NAS transport message.

Step 308: The AMF should send a Nudm_SDM_Info (SDM information) request message to the UDM, where the message carries UPU-MAC-I_{UE}.

Step 309: The UDM should compare received UPU-MAC-I_{UE} with expected UPU-XMAC-I_{UE} temporarily stored by the UDM in step 304.

The UPU may further involve other details, which are not described herein. Refer to the existing protocol for understanding.

### (5) Long-term key

The long-term key is a key shared between the user (the terminal) and a core network (for example, the unified data management (UDM) network element). A long-term key of the terminal may be preconfigured in a SIM card, for example, stored in a secure environment of the SIM card. A long-term key of the network may be stored in the UDM. For ease of description, the long-term key of the terminal is referred to as a first long-term key, and the long-term key of the network is referred to as a second long-term key. It should be understood that, when a symmetric key algorithm is used, the first long-term key and the second long-term key are the same, and correspondingly, key identifiers are also the same. Therefore, the first long-term key and the second long-term key may not be distinguished from each other, and are both referred to as long-term keys.

(6) A first identifier may be understood as a temporary identifier of the terminal, and the first identifier may be updated as a quantity of mutual authentications. For example, a first identifier corresponding to an X^{th} mutual authentication between the terminal and a network is an identifier A, a first identifier corresponding to an (X+1)^{th} mutual authentication between the terminal and the network is an identifier B, and the identifier A is different from the identifier B. This is merely an example for description herein, and is not specifically limited.

The first identifier may be specifically a random sequence code, or a sequence code that complies with a user identity format in a mobile communication network. In addition to the foregoing information, the first identifier may further include a network identifier, for example, a PLMN identifier. How to construct the first identifier is not specifically limited herein.

Optionally, the terminal may obtain the first identifier from a SIM or USIM configuration parameter of the terminal. Alternatively, after the mutual authentication between the terminal and the network succeeds, a network-side device generates a new first identifier and sends the new first identifier to the terminal. After storing the new first identifier, the terminal reads the first identifier from a storage position (for example, a SIM, the USIM, or the ME) of the new first identifier. How the terminal obtains the first identifier is not specifically limited herein.

Optionally, the terminal may be preconfigured with a plurality of first identifiers, for example, a first-identifier resource pool.

In an optional implementation, each first identifier is used for one mutual authentication, so that a different first identifier is used for each of a plurality mutual authentications. For example, during each mutual authentication with the network, a first identifier is selected from the first-identifier resource pool as the first identifier used for the mutual authentication, and the first identifier is deleted from the resource pool.

In another optional implementation, each first identifier may be used for a plurality of mutual authentications, but first identifiers used by a same terminal in two consecutive mutual authentications are different. For example, during each mutual authentication with the network, a first identifier is selected from the first-identifier resource pool as the first identifier used for the mutual authentication.

For the foregoing configuration method, the network side also correspondingly configures a first identifier. For example, the first identifier is configured in the UDM or an ARPF, and a configuration manner is the same as that of the terminal.

(7) A second identifier is determined based on the first identifier in (6).

The second identifier is updated as the first identifier is updated. For example, if the first identifier is an identifier A, a second identifier corresponding to the first identifier is an identifier 1; or if the first identifier is an identifier B, a second identifier corresponding to the first identifier is an identifier 2. This is merely an example for description herein, and is not specifically limited. The second identifier may be carried in a mutual authentication request message between the terminal and the network, and indicates identity information of the terminal in a mutual authentication procedure between the terminal and the network device.

The second identifier is determined based on the first identifier. Specifically, the first identifier may be reused as the second identifier (in other words, the first identifier and the second identifier are a same identifier), or the first identifier is encrypted to determine the second identifier. The second identifier may alternatively be determined based on the first identifier and the long-term key of the terminal (the first long-term key or the second long-term key). For example, the terminal (or the network-side device) performs an encryption operation or a hash operation on the first identifier and the first long-term key to obtain the second identifier. For example, KID=H (K, RAND), where H represents the hash operation. If the terminal calculates the second identifier, K represents the first long-term key; or if the network-side device calculates the second identifier, K represents the second long-term key. RAND represents the first identifier, and KID represents the second identifier.

When the terminal requests to access the network and performs the procedure of the mutual authentication with the network, the foregoing procedure may fail to be performed due to network congestion, a fault in the network-side device, or the like. If the terminal still uses the second identifier used in the procedure execution failure to perform the access and the mutual authentication procedure again, a security risk may exist. Based on this, the second identifier may alternatively be determined based on the first identifier, the first long-term key of the terminal, and a count value indicating a number of times that the terminal has triggered the mutual authentication. For example, an encryption operation or a hash operation is performed on the first identifier, the first long-term key, and the count value to obtain the second identifier. For example, KID=H (K, RAND, COUNT), where COUNT represents the count value, H represents the hash operation, K represents the first long-term key, RAND represents the first identifier, and KID represents the second identifier.

Optionally, the network-side device (for example, the UDM or the ARPF) may pre-calculate the second identifier based on the first identifier, and store a correspondence between the first identifier, the second identifier, and the second long-term key. Specifically, the network-side device may perform pre-calculation with reference to the foregoing manner in which the terminal determines the second identifier based on the first identifier, to obtain the pre-calculated second identifier. Details are not described herein. It should be noted that, when the network-side device pre-calculates the second identifier, the first long-term key that participates in the calculation of the second identifier needs to be replaced with the second long-term key.

(8) A symmetric key algorithm, also referred to as a symmetric encryption algorithm, a private key encryption algorithm, or a shared key encryption algorithm, is a type of encryption algorithm in cryptography. This type of algorithm uses a same key for encryption and decryption. That is, keys are the same.

In this specification, unless otherwise specified, "/" represents "or". For example, A/B may represent A or B. "And/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that in this specification, the term like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term like "example" or "for example" is intended to present a related concept in a specific manner.

To protect user privacy, an existing asymmetric encryption processing mechanism is used to encrypt a permanent identifier (for example, the foregoing SUPI). However, the encryption processing mechanism has high calculation complexity and high calculation consumption, which are unaffordable for some terminal devices.

Based on this, this application provides a processing solution of protecting identity information of a terminal based on a symmetric encryption processing mechanism. Specifically, a second identifier may be determined based on a first identifier (applicable to initially accessing a network and performing mutual authentication) preconfigured in the terminal or an updated first identifier (applicable to subsequently accessing the network and performing mutual authentication) from a network side. In addition, a mutual authentication procedure between the terminal and the network is performed based on the second identifier, and the mutual authentication procedure (for example, 5G primary authentication) between the terminal and the network is not performed by using the SUCI, as shown in Implementation 1. In another optional method, an existing structure of the SUCI may be reconstructed, and accessing the network is performed based on a reconstructed SUCI, as shown in Implementation 2. A specific solution used to encrypt the identity information of the terminal is not specifically limited herein in this application. The following specifically describes implementations of this application. A terminal in the following implementations may be the terminal itself, or may be a chip inside the terminal. The terminal may be a mobile phone, a vehicle-mounted device, an internet of things device, or the like. A network may be a network-side device or a chip of a network-side device. This is not specifically limited herein. The network-side device may include a UDM, an AUSF, a SEAF, an ARPF, and/or the like. The network-side device may be one or more of the network elements, or a device in which a plurality of network elements are co-located. This is not specifically limited herein. The following provides descriptions based on different embodiments. Details are as follows.

### Implementation 1

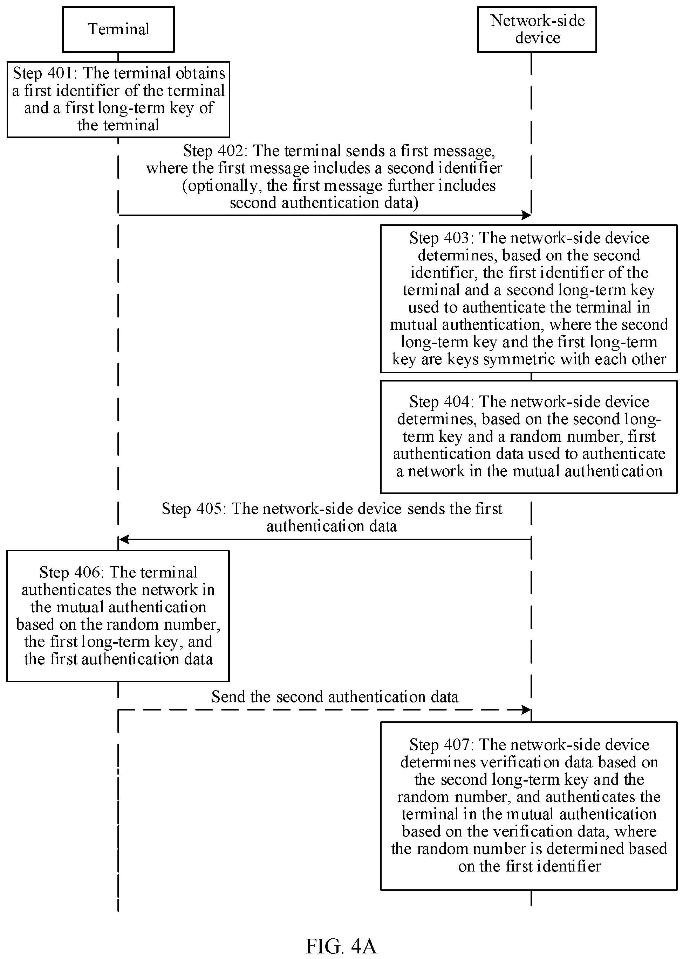

With reference to FIG. 4A, the following describes the technical solution of this application in detail by using a specific method embodiment. It should be noted that FIG. 4A is a schematic flowchart of a method embodiment of this application, and shows detailed communication steps or operations of the method. However, these steps or operations are merely examples. Other operations or variations of the operations in FIG. 4A may be further performed in this embodiment of this application. In addition, the steps in FIG. 4A may be separately performed in a sequence different from a sequence shown in FIG. 4A, and possibly, not all operations in FIG. 4A may be performed. In FIG. 4A, a terminal and a network-side device are used as an example for description. During actual application, interaction with another device may be further involved, and details are not described herein. As shown in FIG. 4A, the method is performed as follows.

Step 401: The terminal obtains a first identifier of the terminal and a first long-term key of the terminal.

Optionally, the terminal may obtain the first identifier from a SIM or USIM configuration parameter of the terminal. Alternatively, after mutual authentication between the terminal and a network succeeds, the network-side device generates a new first identifier and sends the new first identifier to the terminal. After storing the new first identifier, the terminal reads the first identifier from a storage position (for example, a SIM, a USIM, or an ME) of the new first identifier. Specifically, for the first identifier, refer to the foregoing (6) for understanding. Details are not described herein. The first long-term key of the terminal may be obtained from the SIM or USIM configuration parameter of the terminal. Specifically, for the first long-term key, refer to the foregoing (5) for understanding. Details are not described herein. It should be understood that a correspondence between the first identifier and the first long-term key may be configured for each terminal. A correspondence between the first identifier and a second long-term key (the second long-term key and the first long-term key are keys symmetric with each other) is configured for the network side.

In addition, the terminal further determines a second identifier based on the first identifier. For understanding, refer to the foregoing (7). Details are not described herein.

Step 402: The terminal sends a first message, where the first message is used to trigger the mutual authentication, and the first message includes the second identifier. Correspondingly, the network-side device receives the first message.

The first message may be understood as a mutual authentication request message or a registration request message. A message type of the first message is not specifically limited herein in this application. The first message may be sent by reusing existing message signaling, or may be sent by using new message signaling. This is not specifically limited herein.

Optionally, the first message further includes second authentication data for authenticating the terminal, so that the network directly authenticates the terminal, thereby improving mutual authentication efficiency. The second authentication data may be derived based on the first long-term key and the first identifier. For example, RES*=KDF (CK||IK, SN Name, L0, RAND, L1, RES, L2), where RES* is the second authentication data, KDF is a key derivation function, CK=f3 (K, RAND), IK=f4 (K, RAND), SN name is a name of a serving network, L0 is a length corresponding to the name of the serving network, RAND is the first identifier, L1 is a length of the first identifier, RES=f2 (K, RAND), and L2 is a length of RES. It should be understood that the second authentication data may alternatively not be sent together with the second identifier. In other words, the second authentication data and the second identifier are sent via different messages. This is not specifically limited in this application. It should be understood that the second authentication data may alternatively be generated by the terminal after step 405 is performed and when it is determined that the terminal successfully authenticates the network.

In addition, the first message may further include indication information, and the indication information indicates a manner of determining the second identifier. Specifically, the indication information indicates that the second identifier is directly determined based on the first identifier, is determined based on the first identifier and the first long-term key, or is determined based on the first identifier, the first long-term key, and a count value. For example, if the indication information is index1, it indicates that the second identifier is directly determined based on the first identifier. If the indication information is index2, it indicates that the second identifier is determined based on the first identifier and the first long-term key. If the indication information is index3, it indicates that the second identifier is determined based on the first identifier, the first long-term key, and the count value. When the second identifier is determined based on the first identifier, the first long-term key, and the count value, the first message may further include the count value, so that the network-side device more quickly determines, based on the count value and the second identifier, the second long-term key symmetric to the first long-term key.

Step 403: The network-side device determines, based on the second identifier, the first identifier of the terminal and the second long-term key used to authenticate the terminal in the mutual authentication, where the second long-term key and the first long-term key are keys symmetric with each other.

Specifically, the network-side device may store the first identifier and the second long-term key, for example, a UDM or an ARPF stores the first identifier and the second long-term key.

The network-side device may perform pre-calculation based on the stored first identifier to determine the second identifier, and store a correspondence between the first identifier, the pre-calculated second identifier, and the second long-term key. It should be understood that a parameter like the second long-term key may be further used for the pre-calculation. This is not limited in this application. For details, refer to the descriptions in the foregoing (7) for understanding. After receiving the second identifier in step 402, the network-side device may search for a pre-calculated second identifier that is the same as the received second identifier, and determine the second long-term key based on a correspondence between the pre-calculated second identifier and the second long-term key. In addition, the network-side device may further determine the first identifier based on a correspondence between the pre-calculated second identifier and the first identifier.

Alternatively, the network-side device stores the correspondence between the first identifier and the second long-term key. After receiving the second identifier, the network-side device (for example, the UDM) calculates a corresponding second identifier based on the first identifier stored in the network-side device, and compares whether the calculated second identifier is the same as the received second identifier. If the calculated second identifier is the same as the received second identifier, the network-side device determines the first identifier corresponding to the calculated second identifier, and the second long-term key corresponding to the first identifier. In a different implementation, the network-side device may calculate a corresponding second identifier for each first identifier, and then perform comparison, or may perform comparison upon calculating one second identifier, and may stop calculation and comparison when a same second identifier is obtained through comparison. This is not limited in this application.

Step 404: The network-side device determines, based on the second long-term key and a random number, first authentication data used to authenticate the network in the mutual authentication.

Specifically, the network-side device may derive the first authentication data based on the second long-term key and the random number used for the mutual authentication. For example, the UDM determines the first authentication data, or the ARPF determines the first authentication data. After receiving the second identifier, the network-side device determines the first identifier based on the second identifier. Then, the network-side device may generate the random number based on the first identifier. For example, the first identifier is directly used as the random number; or a part of content in the first identifier is extracted as the random number. Alternatively, an encryption operation or a hash operation is performed on the first identifier to determine the random number; or an encryption operation or a hash operation is performed on a part of content of the first identifier to determine the random number. Because the random number is generated based on the first identifier, the random number does not need to be carried during signaling exchange in the mutual authentication between the network and the terminal, so that data processing efficiency can be further improved, and signaling resources can be saved.

The following provides example descriptions of a derivation procedure of the first authentication data. The network-side device determines the corresponding random number based on the first identifier, and calculates the corresponding first authentication data based on the second long-term key and the random number. For example, the UDM performs an operation by using the random number and the second long-term key to obtain AK, and performs an operation based on the random number, the second long-term key, a generated sequence number, and an AMF field, to obtain a MAC, where AUTN=(SQN exclusive OR AK)||AMF||MAC, and AUTN is the first authentication data.

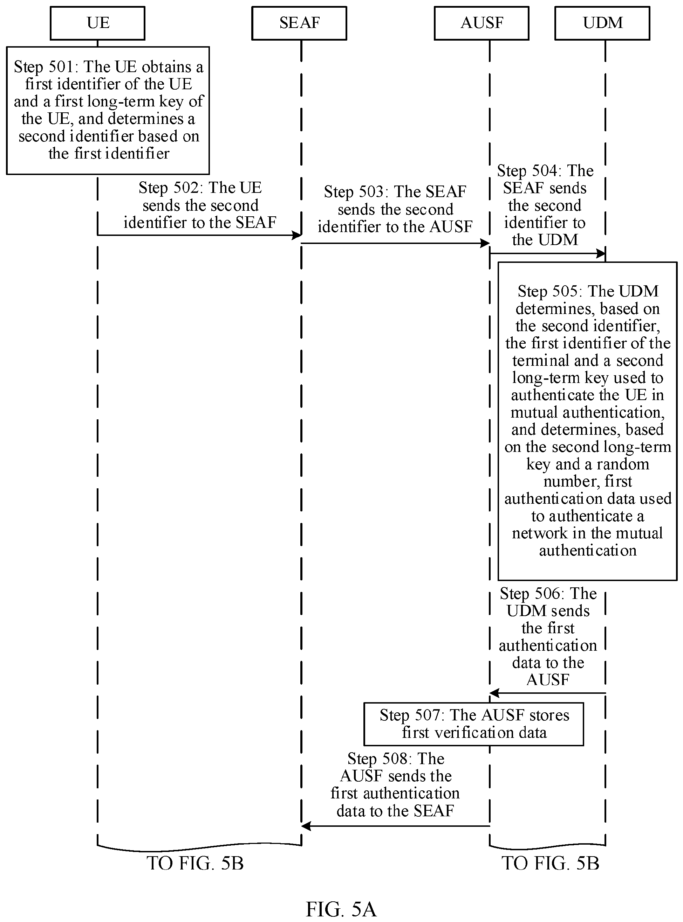

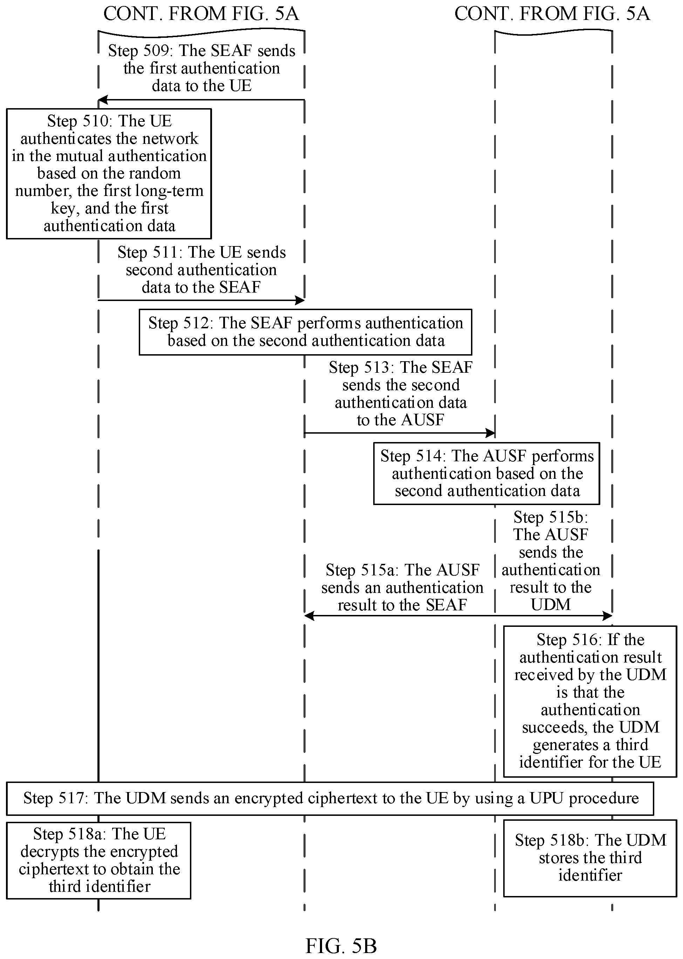

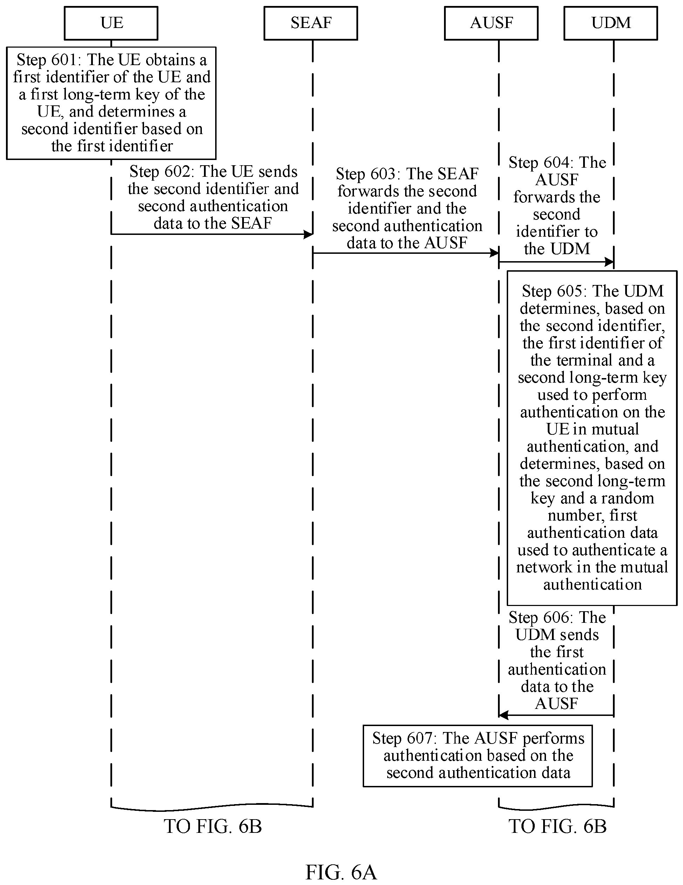

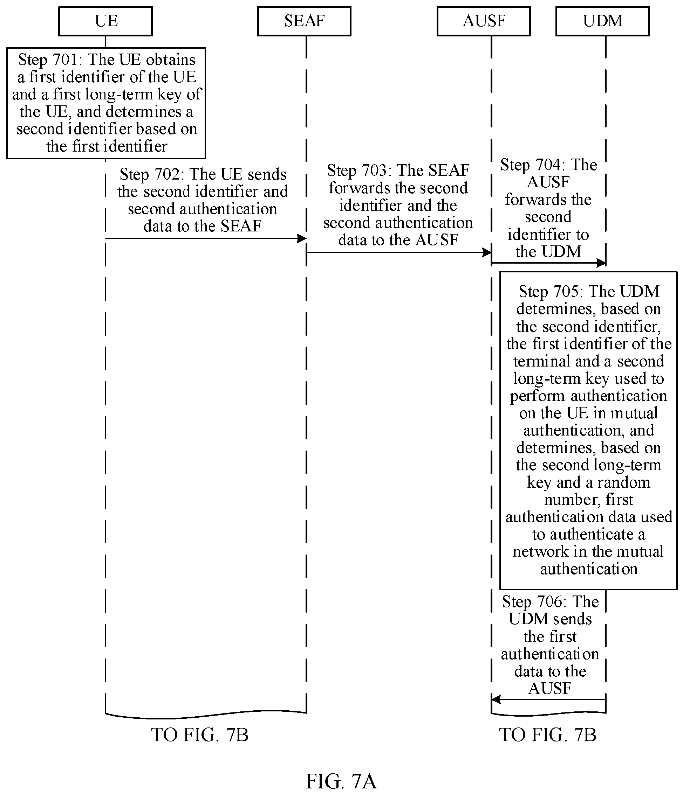

In step 404, that the network-side device determines the first authentication data based on the second long-term key may be understood with reference to step 505 in FIG. 5A and FIG. 5B, step 605 in FIG. 6A, or step 705 in FIG. 7A.

Step 405: The network-side device sends the first authentication data. Correspondingly, the terminal receives the first authentication data.

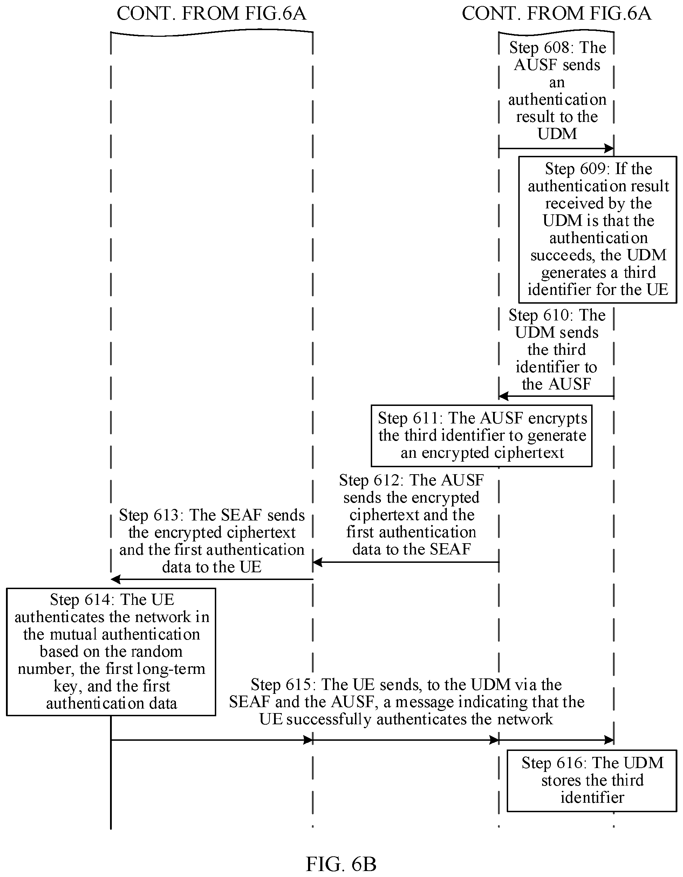

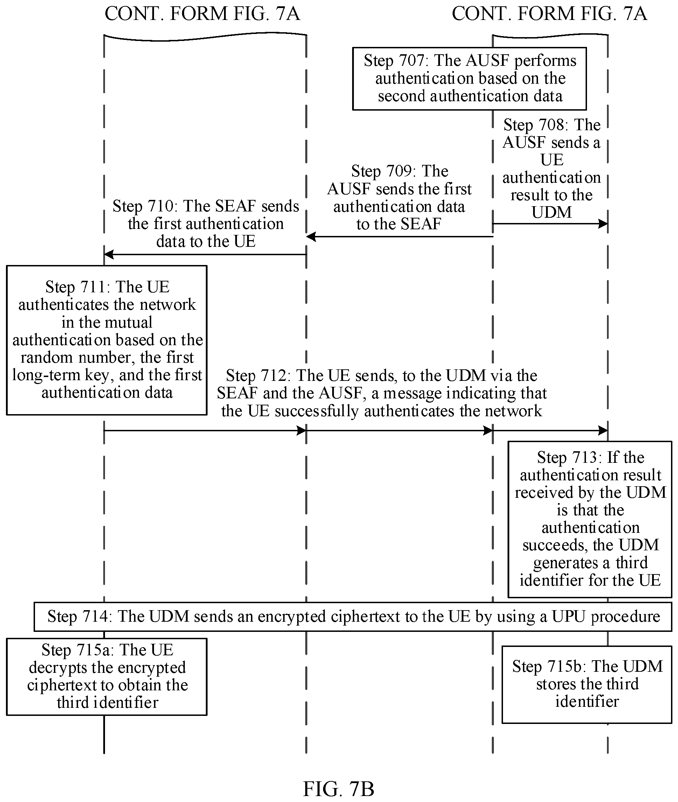

Specifically, that the network-side device sends the first authentication data may be understood as that a plurality of network elements transmit the first authentication data to the terminal. For example, the UDM sends the first authentication data to an AUSF. Then, the AUSF sends the first authentication data to an SEAF. The SEAF sends the first authentication data to the UE. For an execution procedure in which the network-side device sends the first authentication data, refer to step 506, step 508, and step 509 in FIG. 5A and FIG. 5B for understanding, refer to step 606, step 612, and step 613 in FIG. 6A and FIG. 6B for understanding, or refer to step 706, step 709, and step 710 in FIG. 7A and FIG. 7B for understanding. Details are not described herein.

Step 406: The terminal authenticates the network in the mutual authentication based on the random number, the first long-term key, and the first authentication data.

The random number is generated by the terminal based on the first identifier. For understanding, refer to step 404 in which the network-side device generates the random number based on the first identifier. Details are not described herein. The first long-term key may be obtained with reference to step 401.

Optionally, the terminal determines third verification data based on the first long-term key and the random number, and verifies the third verification data and the first authentication data.

Specifically, after receiving the first authentication data (AUTN=(SQN exclusive OR AK)||AMF||MAC), the terminal performs an operation based on the first long-term key and the random number, to obtain AK. Then, the terminal performs an exclusive OR operation on AK and the first authentication data, to obtain the SQN, and verifies whether the SQN is within a correct range. If the SQN is within the correct range, the terminal performs an operation on the SQN, the AMF in the first authentication data, and the first long-term key, to obtain a MAC', and compares whether MAC' is the same as the MAC in the first authentication data. If the MAC' is the same as the MAC, the terminal successfully authenticates the network. The AK and the MAC' may be considered as the third verification data.

In an optional implementation, after successfully authenticating the network, the terminal generates the second authentication data for authenticating the terminal, and sends the second authentication data to the network. For example, the AUSF and/or the SEAF receive/receives the second authentication data, and performs verification based on first verification data and/or second verification data in step 404.

Optionally, if the first message in step 402 does not include the second authentication data, after step 406 is performed, the terminal further sends the second authentication data when it is determined that the terminal successfully authenticates the network. After receiving the second authentication data, the network-side device may perform step 407. Optionally, if the first message in step 402 includes the second authentication data, the network-side device may perform step 407 after step 402. It should be understood that a sequence of step 407 and step 404 is not limited.

Step 407: The network-side device determines verification data based on the second long-term key and the random number, and authenticates the terminal in the mutual authentication based on the verification data, where the random number is determined based on the first identifier.

Specifically, the network-side device may determine the verification data based on the second long-term key and the random number. For the random number, refer to the descriptions in step 404.

Optionally, if the first message in step 402 includes the second authentication data, in an optional implementation, the network-side device determines the first verification data based on the second long-term key and the random number, and verifies the second authentication data by using the first verification data.

In another optional implementation, another network-side device receives and stores the second authentication data. The network-side device determines the first verification data based on the second long-term key and the random number, and sends the first verification data to the another network-side device. The another network-side device verifies the received second authentication data based on the first verification data. In a specific implementation, the network-side device is the UDM, and the another network-side device is the AUSF.

Optionally, if the second authentication data is not sent in the first message in step 402, but the terminal generates the second authentication data and sends the second authentication data to the network-side device after step 406, the network-side device determines the first verification data based on the second long-term key and the random number, and sends the first verification data to the another network-side device. The another network-side device stores the first verification data, and subsequently verifies the second authentication data by using the first verification data after receiving the second authentication data. For example, the UDM may determine the first verification data, and send the first verification data to the AUSF. The AUSF stores the first verification data, for subsequently verifying the received second authentication data after a terminal side sends the second authentication data in step 406.

In an optional implementation, after storing the first verification data, the AUSF may further calculate the second verification data, and send the second verification data to the SEAF. The SEAF stores the second verification data, for subsequently verifying the received second authentication data after the terminal side sends the second authentication data in step 406.

For example, the UDM determines the first verification data XRES* based on the second long-term key and the random number, and sends the first verification data to the AUSF. The AUSF determines the second verification data HXRES* based on the first verification data XRES*.

After receiving the second authentication data, the network-side device may authenticate the terminal based on the verification data and the second authentication data.

Specifically, the UDM determines the first verification data XRES* based on the second long-term key and the random number, and sends the first verification data XRES* to the AUSF. The AUSF stores the first verification data XRES*, and determines the second verification data HXRES* based on the first verification data XRES*. The AUSF sends the second verification data HXRES* to the SEAF, and the SEAF stores the second verification data HXRES*. Further, the SEAF receives the second authentication data RES* from the terminal, and calculates third authentication data HRES* based on the second authentication data RES*. The SEAF verifies the third authentication data HRES* against the second verification data HXRES*. If the second verification data HXRES* is the same as the third authentication data HRES*, the SEAF successfully authenticates the terminal. The SEAF sends the second authentication data RES* to the AUSF. The AUSF verifies the second authentication data RES* against the first verification data XRES*. If the second authentication data RES* is the same as the first verification data XRES*, the AUSF successfully authenticates the terminal. If the SEAF and the AUSF successfully authenticate the terminal, it is considered that the network successfully authenticates the terminal.

Step 407 may be understood with reference to step 512 to step 514 in FIG. 5B, step 607 in FIG. 6A, or step 707 in FIG. 7B. Details are not described herein.

In this application, the terminal may trigger the mutual authentication by sending, to the network, the first message that carries the second identifier, so that the network can determine, based on the second identifier, the second long-term key that is symmetric to the first long-term key of the terminal, and authenticate the terminal based on the second long-term key. The terminal may generate the random number based on the first identifier, and authenticate the network based on the first long-term key, the first authentication data from the network, and the random number. The terminal and the network perform the mutual authentication by using the symmetric keys, requiring no complex calculation, and simplifying processing logic. This is affordable for terminals with limited capabilities.

Further, in a process of the mutual authentication between the terminal and the network, the random number for the mutual authentication is generated based on the first identifier, and the random number does not need to be carried during the signaling exchange in the mutual authentication between the network and the terminal, so that the mutual authentication efficiency can be further improved, and the signaling resources can be saved.

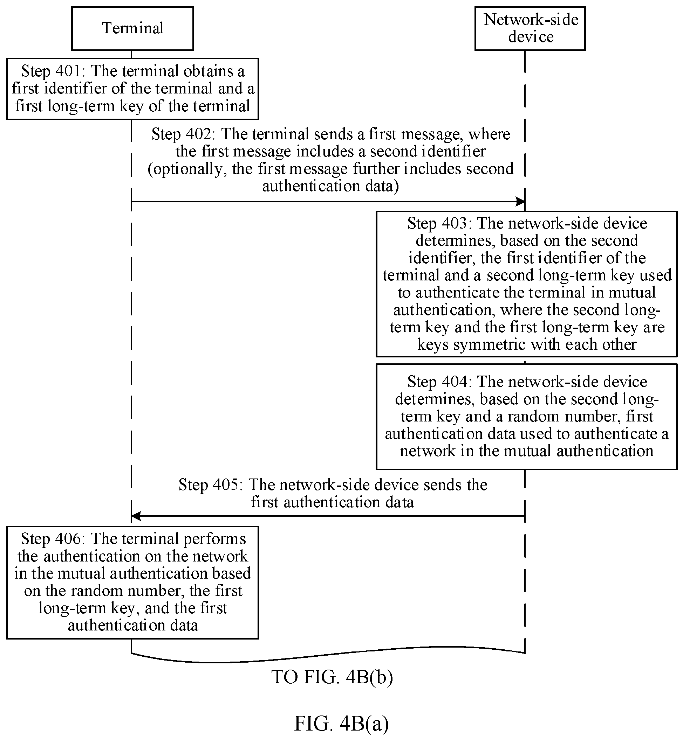

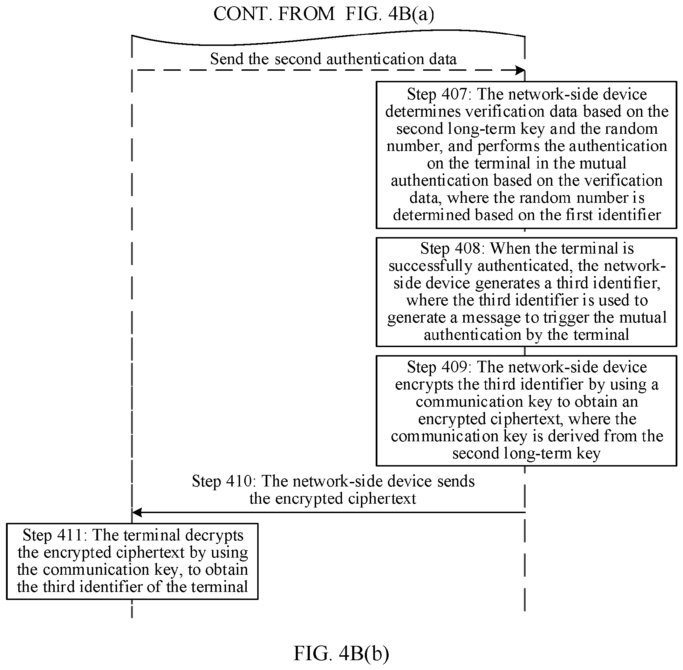

When the terminal and the network perform the mutual authentication again, the first identifier may be updated, so that a second identifier in the first message varies with each mutual authentication. Even if a second identifier is stolen during specific mutual authentication, identity information of the terminal cannot be obtained, thereby ensuring security of the identity information of the terminal. The method may be performed with reference to FIG. 4B(a) and FIG. 4B(b). After step 401 to step 407 are performed, the method further includes the following steps.

Step 408: When the terminal is successfully authenticated, the network-side device generates a third identifier, where the third identifier is used to generate a message for subsequently triggering the mutual authentication again.

Specifically, the third identifier may be a random number generated by a random number generator. Alternatively, the third identifier may include the random number generated by the random number generator and a dedicated identifier (for example, a PLMN identifier). Alternatively, the network-side device (for example, the UDM) maintains a third-identifier resource pool, and each time the network successfully authenticates the terminal, one third identifier is randomly selected from the resource pool. Alternatively, the network-side device maintains incremental sequence numbers with a fixed length, and each time the network successfully authenticates the terminal, a current sequence number is selected as the third identifier of the terminal. A manner of generating the third identifier is not specifically limited herein. Step 408 may be performed by the UDM or the ARPF.

Optionally, the network-side device stores the third identifier. It should be understood that the third identifier is an updated first identifier, for example, is used to generate the message used by the terminal to trigger the mutual authentication again. In other words, the third identifier is used as the first identifier in step 401 during next mutual authentication. Specifically, the network-side device may replace the original first identifier with the third identifier, or the network-side device reserves the original first identifier and further stores the third identifier. This is not limited.

Step 409: The network-side device encrypts the third identifier by using a communication key to obtain an encrypted ciphertext, where the communication key is derived from the second long-term key.

Specifically, the communication key may be a key derived from the second long-term key, or a key derived based on the first identifier and the second long-term key. A manner of generating the communication key is not specifically limited herein.

Step 409 may be performed by the UDM or the ARPF. For example, the UDM generates the third identifier, and the UDM encrypts the third identifier by using the communication key to obtain the encrypted ciphertext. Step 409 may alternatively be performed by the AUSF. For example, the UDM sends the third identifier to the AUSF, the AUSF receives the third identifier, and then the AUSF encrypts the third identifier by using the communication key to obtain the encrypted ciphertext.

Optionally, the network-side device may further encrypt the first identifier and the third identifier by using the communication key to obtain an encrypted ciphertext.

Step 410: The network-side device sends the encrypted ciphertext. Correspondingly, the terminal receives the encrypted ciphertext.

The encrypted ciphertext may be transmitted by the UDM or the ARPF to the terminal via the AUSF and the SEAF. Optionally, the network-side device may further transmit the encrypted ciphertext by using a terminal parameter update procedure. For example, the encrypted ciphertext is transmitted by using a UPU procedure. Specifically, the encrypted ciphertext is used as UPU data in the UPU procedure.

Optionally, the network-side device may further encrypt and transmit the third identifier by using the UPU procedure. Specifically, the third identifier is used as the UPU data in the UPU procedure.

Step 411: The terminal decrypts the encrypted ciphertext by using the communication key, to obtain the third identifier of the terminal.

After obtaining the third identifier, the terminal may store the third identifier. It should be understood that the third identifier is the updated first identifier, for example, is used to generate the message used by the terminal to trigger the mutual authentication again. In other words, the third identifier is used as the first identifier in step 401 during the next mutual authentication. Specifically, the terminal may replace the original first identifier with the third identifier, or the terminal reserves the original first identifier and further stores the third identifier. This is not limited.

Optionally, after obtaining the third identifier by decrypting the encrypted ciphertext, the terminal may further send, to the network-side device, an acknowledgment message indicating that the terminal has successfully received the third identifier. After receiving the acknowledgment message, the network-side device may store the third identifier.

In this application, the terminal may update the first identifier based on the third identifier. When the terminal and the network device perform the mutual authentication again, the terminal may determine a new second identifier based on the updated first identifier. Based on this, the second identifier in the first message varies with each mutual authentication. Even if the second identifier is stolen, the identity information of the terminal cannot be obtained, thereby ensuring the security of the identity information of the terminal. Therefore, the message that is sent by the terminal and that is used to trigger the mutual authentication may not include a permanent identifier of the terminal, but include the second identifier determined based on the updated first identifier. Even if an attacker obtains the second identifier in the first message, the attacker cannot decipher an identity of the terminal.

In the solutions in FIG. 4A and FIG. 4B(a) and FIG. 4B(b), the first identifier replaces an SUPI in an existing procedure as an identifier of the terminal to perform the mutual authentication. It should be understood that, although the SUPI is not used for the mutual authentication in this embodiment, the SUPI may still be reserved. In a procedure after the mutual authentication is completed, the SUPI is still used as an identifier of a user inside the network-side device, so that the network-side device tracks information such as a log of the user. Specifically, the network-side device may determine the SUPI based on the first identifier or the second identifier, and then use the SUPI. For example, in the foregoing UPU procedure, the SUPI may still be used, and the first identifier is not used as the identifier of the terminal.

The following describes the solutions of this application in detail with reference to processing procedures in FIG. 5A to FIG. 7B. In the following figures, an example in which the mutual authentication is primary authentication is used for description. However, the mutual authentication is not limited to the primary authentication, and may alternatively be other authentication. The following uses data exchange between the UE, the SEAF, the AUSF, and the UDM as an example for description. The UDM may alternatively be the ARPF. Some network elements may be co-located. For example, the SEAF and the AUSF are co-located, or the SEAF, the AUSF, and the UDM are co-located. This is not specifically limited herein. Before the following procedures in FIG. 5A to FIG. 7B are performed, both the UE and the UDM may be preconfigured with a long-term key and a first identifier. Specifically, the UE is preconfigured with a first long-term key and the first identifier. The UDM is preconfigured with a second long-term key and the first identifier.

Refer to FIG. 5A and FIG. 5B. The following steps are performed.

Step 501: UE obtains a first identifier of the UE and a first long-term key of the UE, and determines a second identifier based on the first identifier.

Specifically, the first identifier may be obtained with reference to step 401 in FIG. 4A. In an optional implementation, the UE obtains the first long-term key from a USIM, and obtains the first identifier from an ME. Manners of obtaining the first identifier and the first long-term key is not specifically limited in this application. For a feature of the first identifier, refer to the foregoing (6) for understanding. Details are not described herein.

For a manner of determining the second identifier, refer to the foregoing (7) for understanding. Details are not described herein.

Step 502: The UE sends the second identifier to an SEAF. Correspondingly, the SEAF receives the second identifier.

Specifically, the second identifier may be carried in a first message, and the first message may be specifically a registration request message or an identity response message. In other words, the registration request message initiated by the UE may carry the second identifier; or a network side initiates an identity request, so that the identity response message sent by the UE carries the second identifier.

The first message may further carry a count value, for example, in a case in which the count value is introduced when the second identifier is determined. In addition, the first message may further carry indication information of a mutual authentication method, to be specific, indication information of the foregoing 5G-AKA, EAP-AKA, or EAP-TLS, or the like.

Step 503: The SEAF sends the second identifier to an AUSF. Correspondingly, the AUSF receives the second identifier.

Step 504: The SEAF sends the second identifier to a UDM. Correspondingly, the UDM receives the second identifier.

It should be understood that the second identifier may be transferred between network-side devices via different messages.

For example, after receiving the first message, the SEAF sends an authentication request message to the AUSF, and after receiving the authentication request message, the AUSF sends an authentication vector obtaining request message to the UDM/an ARPF. The authentication request message and the authentication vector obtaining request message carry the parameter described in 502.

Step 505: The UDM determines, based on the second identifier, the first identifier of the terminal and a second long-term key used to authenticate the UE in mutual authentication, and determines, based on the second long-term key and a random number, first authentication data used to authenticate a network in the mutual authentication, where the random number is generated based on the first identifier, and the second long-term key and the first long-term key of the UE are keys symmetric with each other.

Specifically, after receiving the second identifier, the UDM determines the second long-term key and the first identifier. For understanding, refer to the descriptions in step 403 in FIG. 4A. Details are not described herein. In addition, for a manner of generating the random number, refer to step 403 in FIG. 4A for understanding.

The UDM may determine the first authentication data AUTN based on the second long-term key and the random number. It should be understood that an operation of the UDM in this application may alternatively be specifically performed by the ARPF. For ease of description, an example in which the UDM performs the operation is used subsequently.

Optionally, the UDM further determines first verification data XRES* based on the second long-term key and the random number.

For example, the UDM calculates CK and IK based on the second long-term key and the random number, where CK=f3 (K, RAND), IK=f4 (K, RAND), f3 and f4 are encryption functions, K is the second long-term key, and RAND is the random number. Then, the UDM further derives the first authentication data AUTN and the first verification data (XRES*) based on CK and IK. XRES* may be used by the AUSF to authenticate the terminal. XRES may be determined through encryption calculation on the second long-term key and the random number. For example, XRES=f2 (K, RAND), where f2 is an encryption function, K is the second long-term key, and RAND is the random number. XRES* is determined by performing encryption calculation on CK, IK, the random number, and a serving network name. For example, XRES*=KDF (CK||IK, SN Name, L0, RAND, L1, XRES, L2), where KDF is a key derivation function, SN name is a name of the serving network, L0 is a length corresponding to the name of the serving network, RAND is the random number, L1 is a length of the random number, and L2 is a length of XRES. AUTN may be determined by performing an encryption operation on the random number and an authentication management field AMF. For example, AUTN=SQN xor AK||AMF||MAC, where xor represents exclusive OR, SQN represents sequence numbers maintained by the UE and the UDM, MAC=f1 (SQN||RAND||AMF), and AK=f5 (RAND). The foregoing f1, f2, f3, f4, and f5 are merely examples, and a specific encryption function is not specifically limited herein. Optionally, if the random number determined based on the first identifier is the same as the first identifier, the random number used to determine the first authentication data and the first verification data may alternatively be replaced with the first identifier.

Optionally, during key derivation, KID is also used as an input. That is, CK=f3 (K, RAND, KID), and IK=f4 (K, RAND, KID), where KID is the second identifier.

It should be understood that an execution sequence of determining actions of the UDM in this application is not limited. For example, the first verification data XRES* may alternatively be first determined, and then the first authentication data may be determined. This is not limited in this application. Another embodiment is similar.

Step 506: The UDM sends the first authentication data to the AUSF. Optionally, in step 506, the UDM further sends the first verification data to the AUSF. Correspondingly, the AUSF receives the first authentication data and the first verification data.

Specifically, the first authentication data and/or the first verification data are/is transferred by using an authentication vector obtaining response message.

Step 507: The AUSF stores the first verification data.

Optionally, the AUSF stores the first verification data, so that in step 514, the AUSF may authenticate the UE based on the first verification data. The key derivation is performed based on the first verification data, to obtain second verification data. For example, the AUSF derives the second verification data HXRES* from the first verification data XRES*. For understanding, refer to 5G primary authentication. Details are not described herein.

Step 508: The AUSF sends the first authentication data to the SEAF.

Optionally, the AUSF further sends the second verification data to the SEAF. Correspondingly, the SEAF receives the first authentication data and the second verification data, and stores the second verification data, so that in step 512, the SEAF may perform verification based on the second verification data.

Specifically, the second verification data and/or the first authentication data are/is transferred by using an authentication response message.

Step 509: The SEAF sends the first authentication data to the UE. Correspondingly, the UE receives the first authentication data.

Sending in step 509 may be performed by using a NAS message. Specifically, the NAS message may be an authentication request message. To distinguish the authentication request message from the authentication request message in step 503, the authentication request message in step 509 may be referred to as a second authentication request message, and the authentication request message in step 503 may be referred to as a first authentication request message.

Step 510: The UE authenticates the network in the mutual authentication based on the random number, the first long-term key, and the first authentication data.

If the terminal successfully authenticates the network, the terminal generates second authentication data based on the first long-term key and the random number.

It should be noted that the UE includes two parts: the ME and the USIM. The ME may receive the first authentication data, and the USIM may calculate the second authentication data. Specifically, the ME may forward the first authentication data received in the NAS message to the USIM.

The UE authenticates the network in the mutual authentication based on the random number, the first long-term key, and the first authentication data. For understanding, refer to the descriptions in step 406. Details are not described herein.

If the terminal successfully authenticates the network, the terminal generates the second authentication data based on the first long-term key and the random number. For example, RES*=KDF (CK||IK, SN Name, L0, RAND, L1, RES, L2), where RES* is the second authentication data, KDF is the key derivation function, CK=f3 (K, RAND), IK=f4 (K, RAND), SN name is the name of the serving network, L0 is the length corresponding to the name of the serving network, RAND is the random number, L1 is the length of the random number, RES=f2 (K, RAND), and L2 is a length of RES. The foregoing f2, f3, and f4 are merely examples, and a specific encryption function is not specifically limited herein. Optionally, if the random number determined based on the first identifier is the same as the first identifier, the random number used to determine the first authentication data and verification data may alternatively be replaced with the first identifier.

Optionally, during key derivation, KID is also used as an input. That is, CK=f3 (K, RAND, KID), and IK=f4 (K, RAND, KID), where KID is the second identifier.

Step 511: The UE sends the second authentication data to the SEAF. Correspondingly, the SEAF receives the second authentication data.

Specifically, the second authentication data may be carried in an authentication response message for transferring.

Step 512: The SEAF performs authentication based on the second authentication data.

Specifically, the SEAF calculates third authentication data HRES* based on the second authentication data, and verifies the third authentication data HRES* against the second verification data HXRES*. For specific calculation and verification methods, refer to the 5G primary authentication for understanding. Details are not described herein. If the third authentication data HRES* is the same as the second verification data HXRES*, the authentication succeeds. Specifically, it indicates that the UE has permission to access a visited network. It should be understood that the authentication performed by the network side on the UE may specifically include the authentication in step 512 and/or the authentication in step 514.

Step 513: The SEAF sends the second authentication data to the AUSF. Correspondingly, the AUSF receives the second authentication data.

Specifically, the second authentication data may be carried in an authentication request message for transferring. For distinguishing, the authentication request message may be referred to as a third authentication request message.

Step 514: The AUSF performs the authentication based on the second authentication data.

Specifically, the AUSF performs verification based on the second authentication data RES* and the first verification data XRES*. If RES* is the same as XRES*, it is considered that the UE is successfully authenticated. Specifically, it indicates that the UE has permission to access a home network.

Step 515a: The AUSF sends an authentication result to the SEAF. Correspondingly, the SEAF receives the authentication result.

Step 515b: The AUSF sends the authentication result to the UDM. Correspondingly, the UDM receives the authentication result.

An execution sequence of step 515a and step 515b is not specifically limited herein. If the AUSF considers that the UE has permission to access the home network, the authentication result is that the authentication succeeds. If the AUSF considers that the UE does not have permission to access the home network, the authentication result is that the authentication fails.

Further, the network side may update the first identifier. Steps are as follows.

Step 516: If the authentication result received by the UDM is that the authentication succeeds, the UDM generates a third identifier for the UE.

Optionally, the UDM may further encrypt the third identifier to obtain an encrypted ciphertext. For example, the third identifier is RAND', and the UDM may encrypt RAND' to generate the encrypted ciphertext. For understanding, refer to step 408 and step 409 in FIG. 4B(b). Details are not described herein.

Step 517: The UDM sends the encrypted ciphertext or the third identifier to the UE by using a UPU procedure.

For example, the encrypted ciphertext is transmitted by using the UPU procedure. Specifically, the encrypted ciphertext is used as UPU data in the UPU procedure.

Optionally, the UDM may encrypt and transmit the third identifier by using the UPU procedure. Specifically, the third identifier is used as UPU data in the UPU procedure. In FIG. 5A and FIG. 5B, an example in which the UDM sends the encrypted ciphertext to the UE by using the UPU procedure in step 517 is used for description.

Step 518a: The UE decrypts the encrypted ciphertext to obtain the third identifier, or performs direct decryption to obtain the third identifier.

Optionally, the UE stores the third identifier. It should be understood that the third identifier is an updated first identifier, for example, is used to generate a message used by the terminal to trigger the mutual authentication again. In other words, the third identifier is used as the first identifier in step 501 during next mutual authentication. Specifically, the UE may replace the original first identifier with the third identifier, or the UE reserves the original first identifier and further stores the third identifier. This is not limited.

Optionally, after obtaining the third identifier, the UE sends, to the UDM, an acknowledgment message indicating that the UE successfully receives the third identifier, to trigger execution of step 518b.

Step 518b: The UDM stores the third identifier.

Specifically, the UDM may update the first identifier to the third identifier. For details, refer to step 518a. In addition, the UDM may further pre-calculate a new second identifier based on the third identifier.

An execution sequence of step 518a and step 518b is not specifically limited herein.

In the method, a symmetric cryptographic mechanism is used to protect user privacy, and the first identifier replaces a random number in a primary authentication procedure, thereby reducing overheads of the primary authentication procedure. In addition, in a scenario of resisting quantum attacks, using a 256-bit symmetric cryptographic algorithm can achieve beneficial effect of resisting the quantum attacks, and reduce calculation and transmission consumption introduced by a post-quantum cryptographic algorithm.

Refer to FIG. 6A and FIG. 6B. The following steps are performed.

Step 601: UE obtains a first identifier of the UE and a first long-term key of the UE, and determines a second identifier based on the first identifier. The UE further generates second authentication data based on the first long-term key and a random number. The random number is generated based on the first identifier. For obtaining of the first identifier and the first long-term key, and determining of the second identifier, refer to step 501 in FIG. 5A for understanding. Details are not described herein again.

For generation of the second authentication data, refer to step 510 in FIG. 5B. Details are not described herein.

Step 602: The UE sends the second identifier and the second authentication data to an SEAF. Correspondingly, the SEAF receives the second identifier and the second authentication data.

Specifically, the second identifier and the second authentication data may be carried in a first message, and the first message may be specifically a registration request message or an identity response message. In other words, the registration request message initiated by the UE may carry the second identifier and the second authentication data; or a network side initiates an identity request, so that the identity response message sent by the UE carries the second identifier and the second authentication data.

The first message may further carry a count value, for example, in a case in which the count value is introduced when the second identifier is determined. In addition, the first message may further carry indication information of a mutual authentication method, to be specific, indication information of the foregoing 5G-AKA, EAP-AKA, or EAP-TLS, or the like.

The second authentication data may be determined with reference to step 510 in FIG. 5B. This is not specifically limited herein.

Step 603: The SEAF forwards the second identifier and the second authentication data to an AUSF. Correspondingly, the AUSF receives the second identifier and the second authentication data.

Step 604: The AUSF forwards the second identifier to a UDM. Correspondingly, the UDM receives the second identifier.

Optionally, the AUSF stores the second authentication data.

Optionally, the AUSF further forwards the second authentication data to the UDM. Correspondingly, the UDM receives the second authentication data.

It should be understood that the second identifier may be transferred between network-side devices via different messages. The second authentication data and the second identifier may be carried in a same message.

For example, after receiving the first message, the SEAF sends an authentication request message to the AUSF, and after receiving the authentication request message, the AUSF sends an authentication vector obtaining request message to the UDM. The authentication request message and the authentication vector obtaining request message carry the parameters described in step 602.

Step 605: The UDM determines, based on the second identifier, the first identifier of the terminal and a second long-term key used to authenticate the UE in mutual authentication, and determines, based on the second long-term key and the random number, first authentication data used to authenticate a network in the mutual authentication, where the random number is generated based on the first identifier, and the second long-term key and the first long-term key of the UE are keys symmetric with each other.

The first authentication data may be determined with reference to step 505 in FIG. 5A. Details are not described herein again. In addition, first verification data may be determined with reference to step 505 in FIG. 5A.

Step 606: The UDM sends the first authentication data to the AUSF. Correspondingly, the AUSF receives the first authentication data.

Optionally, if the AUSF stores the second authentication data in step 604, the UDM further sends the first verification data to the AUSF in step 606. Correspondingly, the AUSF receives the first verification data.

Specifically, the first authentication data and/or the first verification data may be transferred by using an authentication vector obtaining response message.

Step 607: The UDM/AUSF performs authentication based on the second authentication data.

In FIG. 6A and FIG. 6B, an example in which the AUSF performs the authentication based on the second authentication data in step 607 is used for description.

If the AUSF forwards the second authentication data to the UDM in step 604, the UDM may verify the second authentication data by using the first verification data, to authenticate the terminal.

If the AUSF does not forward the second authentication data to the UDM in step 604, the AUSF verifies, based on the first verification data received in step 606, the second authentication data that is received in step 603 and stored in step 604, to authenticate the terminal. In other words, the AUSF stores the second authentication data in step 604.

Specifically, the UDM/AUSF performs the authentication based on the second authentication data RES* and the first verification data XRES*. If RES* is the same as XRES*, it is considered that the UE is successfully authenticated.

It should be noted that step 607 may be performed after the first verification data is determined in step 605 on a UDM side, or may be performed after the first verification data is received in step 606 on an AUSF side. This is not limited herein.

Step 608: The UDM obtains an authentication result.

In an optional implementation, the UDM verifies the second authentication data according to step 607, to obtain the authentication result. In another optional implementation, the AUSF verifies the second authentication data according to step 607 to obtain the authentication result, and sends the authentication result to the UDM, so that the UDM obtains the authentication result. In FIG. 6A and FIG. 6B, an example in which the AUSF sends the authentication result to the UDM is used for description in step 608.

Further, the network side may update the first identifier. Steps are as follows.

Step 609: If the authentication result received by the UDM is that the authentication succeeds, the UDM generates a third identifier for the UE.

Optionally, the UDM may further encrypt the third identifier to obtain an encrypted ciphertext. For example, the third identifier is RAND', and the UDM may encrypt RAND' to generate the encrypted ciphertext. For understanding, refer to step 408 and step 409 in FIG. 4B(b), or step 516 in FIG. 5B. Details are not described herein.

Step 610: The UDM sends the third identifier or the encrypted ciphertext to the AUSF.

In FIG. 6A and FIG. 6B, an example in which the UDM sends the third identifier to the AUSF in step 610 is used for description.

Step 611: The AUSF encrypts the third identifier to generate the encrypted ciphertext.

Optionally, the UDM may encrypt the third identifier to generate the encrypted ciphertext, and send the encrypted ciphertext to the AUSF.

If in step 609, the UDM generates the third identifier and encrypts the third identifier to generate the encrypted ciphertext, in step 610, the UDM sends the encrypted ciphertext to the AUSF, and step 611 may not be performed.

Step 612: The AUSF sends the encrypted ciphertext and the first authentication data to the SEAF. Correspondingly, the SEAF receives the encrypted ciphertext and the first authentication data.

Specifically, the encrypted ciphertext and/or the first authentication data are/is transferred by using an authentication response message.

It should be understood that the first authentication data and the encrypted ciphertext may be sent via a same message, or may be sent via different messages. For example, the AUSF sends the first authentication data after step 607, and the AUSF sends a first encrypted ciphertext after step 610 or 611.

Step 613: The SEAF sends the encrypted ciphertext and the first authentication data to the UE. Correspondingly, the UE receives the encrypted ciphertext and the first authentication data.

Sending in step 613 may be performed by using a NAS message. Specifically, the NAS message may be an authentication request message. To distinguish the authentication request message from the authentication request message in step 603, the authentication request message in step 613 may be referred to as a second authentication request message, and the authentication request message in step 603 may be referred to as a first authentication request message.

Similar to the descriptions in step 612, the first authentication data and the encrypted ciphertext may be sent via a same message, or may be sent via different messages.

Step 614: The UE authenticates the network in the mutual authentication based on the random number, the first long-term key, and the first authentication data.

For specific authentication, refer to step 510 in FIG. 5B. Details are not described herein.

If the terminal successfully authenticates the network, the terminal decrypts the encrypted ciphertext to obtain the third identifier, and stores the third identifier. It should be understood that the third identifier is an updated first identifier, for example, is used to generate a message used by the terminal to trigger the mutual authentication again. In other words, the third identifier is used as the first identifier in step 601 during next mutual authentication. Specifically, the UE may replace the original first identifier with the third identifier, or the UE reserves the original first identifier and further stores the third identifier. This is not limited.

Step 615: The UE sends, to the UDM via the SEAF and the AUSF, a message indicating that the UE successfully authenticates the network. Correspondingly, the UDM receives the message indicating that the UE successfully authenticates the network.

It should be understood that step 609 may alternatively be performed after step 615. To be specific, when determining that the mutual authentication succeeds, the UDM generates the third identifier (which is similar for the encrypted ciphertext, and details are not described again), and sends the third identifier.

Alternatively, the UDM may first generate the third identifier, and then send the third identifier after step 615. In other words, the UDM sends the third identifier when determining that the mutual authentication succeeds.

Step 616: The UDM stores the third identifier.

Specifically, the UDM may update the first identifier to the third identifier. For details, refer to step 518a. In addition, the UDM may further pre-calculate a new second identifier based on the third identifier.

In the method, a symmetric cryptographic mechanism is used to protect user privacy, and a transmission procedure of an identifier (namely, the first identifier) of the terminal, a primary authentication procedure, and a transmission procedure of a new identifier (namely, the third identifier) of the terminal are combined, thereby reducing transmission consumption. In addition, in a scenario of resisting quantum attacks, using a 256-bit symmetric cryptographic algorithm can achieve beneficial effect of resisting the quantum attacks, and reduce calculation and transmission consumption introduced by a post-quantum cryptographic algorithm. In addition, in the procedure, the second identifier and the second authentication data for authenticating the terminal are sent together, thereby reducing signaling overheads, and improving data processing efficiency.

Refer to FIG. 7A and FIG. 7B. The following steps are performed.

An execution procedure of step 701 to step 708 is the same as that of step 601 to step 608 in FIG. 6A and FIG. 6B. For understanding, refer to the foregoing descriptions. Details are not described herein.

Step 709: An AUSF sends first authentication data to an SEAF. Correspondingly, the SEAF receives the first authentication data.

Specifically, the first authentication data is transferred by using an authentication vector obtaining response message.

Step 710: The SEAF sends the first authentication data to UE. Correspondingly, the UE receives the first authentication data.

Sending in step 710 may be performed by using a NAS message. Specifically, the NAS message may be an authentication request message. To distinguish the authentication request message from an authentication request message in step 703, the authentication request message in step 710 may be referred to as a second authentication request message, and the authentication request message in step 703 may be referred to as a first authentication request message.

Step 711: The UE authenticates a network in mutual authentication based on a random number, a first long-term key, and the first authentication data.

For understanding, refer to step 510 in FIG. 5B. Details are not described herein.

Step 712: The UE sends, to a UDM via the SEAF and the AUSF, a message indicating that the UE successfully authenticates the network. Correspondingly, the UDM receives the message indicating that the UE successfully authenticates the network.

Step 713: If an authentication result received by the UDM is that the authentication succeeds, the UDM generates a third identifier for the UE.

Optionally, the UDM may further encrypt the third identifier to obtain an encrypted ciphertext. For example, the third identifier is RAND', and the UDM may encrypt RAND' to generate the encrypted ciphertext.

For a process of generating the third identifier and encrypting the third identifier, refer to step 408 and step 409 in FIG. 4B(b), step 516 in FIG. 5B, or step 609 in FIG. 6B. Details are not described herein.

Step 714: The UDM sends the third identifier or the encrypted ciphertext to the UE by using a UPU procedure.

For understanding, refer to step 517 in FIG. 5B. Details are not described herein. In FIG. 7A and FIG. 7B, an example in which the UDM sends the encrypted ciphertext to the UE by using the UPU procedure in step 714 is used for description.

Step 715a: The UE decrypts the encrypted ciphertext to obtain the third identifier, or performs direct decryption to obtain the third identifier.

Optionally, the UE stores the third identifier. It should be understood that the third identifier is an updated first identifier, for example, is used to generate a message used by the terminal to trigger the mutual authentication again. In other words, the third identifier is used as the first identifier in step 701 during next mutual authentication. Specifically, the UE may replace the original first identifier with the third identifier, or the UE reserves the original first identifier and further stores the third identifier. This is not limited.

Optionally, after obtaining the third identifier, the UE sends, to the UDM, an acknowledgment message indicating that the UE successfully receives the third identifier, to trigger execution of step 715b.

Step 715b: The UDM stores the third identifier.

Specifically, the UDM may update the first identifier to the third identifier. For details, refer to step 715a. In addition, the UDM may further pre-calculate a new second identifier based on the third identifier.

An execution sequence of step 715a and step 715b is not specifically limited herein.

In the method, a symmetric cryptographic mechanism is used to protect user privacy, and a transmission procedure of an identifier (namely, the first identifier) of the terminal, a primary authentication procedure, and a transmission procedure of a new identifier (namely, the third identifier) of the terminal are combined, thereby reducing transmission consumption. In addition, in a scenario of resisting quantum attacks, using a 256-bit symmetric cryptographic algorithm can achieve beneficial effect of resisting the quantum attacks, and reduce calculation and transmission consumption introduced by a post-quantum cryptographic algorithm. In addition, in the procedure, the second identifier and second authentication data for authenticating the terminal are sent together, thereby reducing signaling overheads, and improving data processing efficiency. In addition, compared with the solution in FIG. 6A and FIG. 6B, the solution in FIG. 7A and FIG. 7B has a smaller change, and better adapts to a requirement of a current communication system.

### Implementation 2

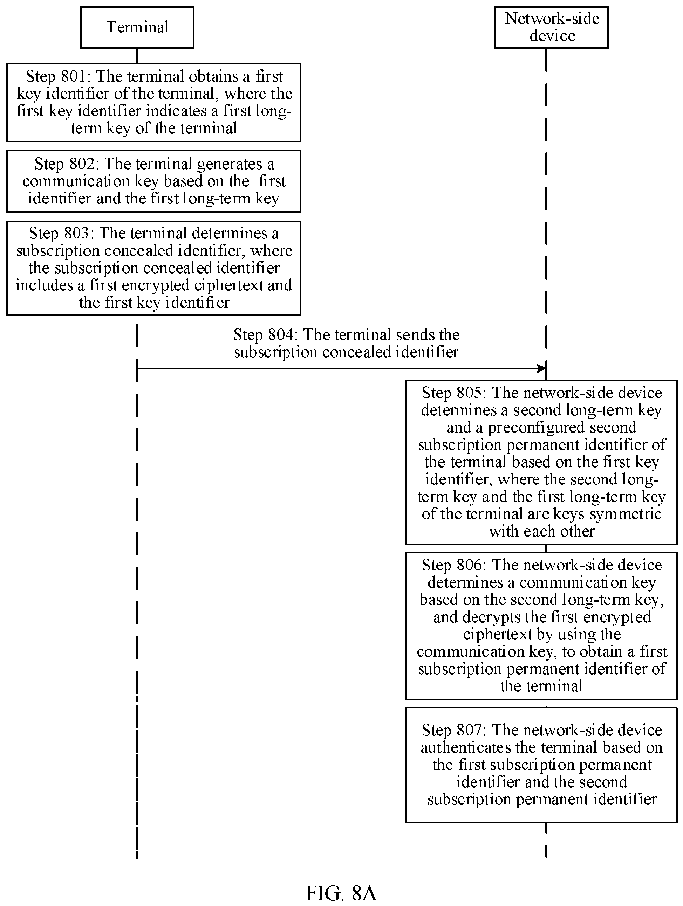

The following describes the technical solution of this application in detail with reference to FIG. 8A by using a specific method embodiment. It should be noted that FIG. 8A is a schematic flowchart of a method embodiment of this application, and shows detailed communication steps or operations of the method. However, these steps or operations are merely examples. Other operations or variations of the operations in FIG. 8A may be further performed in this embodiment of this application. In addition, the steps in FIG. 8A may be separately performed in a sequence different from a sequence shown in FIG. 8A, and possibly, not all operations in FIG. 8A may be performed. In FIG. 8A, a terminal and a network-side device are used as an example for description. During actual application, interaction with another device may be further involved, and details are not described herein. As shown in FIG. 8A, the method is performed as follows.

Step 801: The terminal obtains a first key identifier of the terminal, where the first key identifier indicates a first long-term key of the terminal.

Optionally, the terminal may obtain the first key identifier from a SIM or USIM configuration parameter of the terminal. Alternatively, after identity authentication of the terminal succeeds, the network-side device generates a new first key identifier and sends the new first key identifier to the terminal. After storing the new first key identifier, the terminal reads the first key identifier from a storage position (for example, a SIM, a USIM, or an ME) of the new first key identifier.

In an optional implementation, the first key identifier is obtained from the ME, and the first long-term key is obtained from the USIM or the SIM.

In another optional implementation, the first long-term key and the first key identifier are obtained from the USIM or the SIM. The first key identifier may be a temporary key identifier that is generated and sent to the UE after a network successfully authenticates the terminal. The first key identifier is not specifically limited herein.

In addition, the terminal further obtains a first subscription permanent identifier preconfigured in the terminal. Specifically, the terminal may obtain the first subscription permanent identifier from the SIM or the USIM.

Optionally, the terminal may be preconfigured with a plurality of first key identifiers, for example, a resource pool of the first key identifier. In an optional implementation, each first key identifier is used for only one identity authentication, so that a first key identifier in each of a plurality of times of identity authentication vary. For example, each time the authentication is performed with the network, one first key identifier is selected from the resource pool of the first key identifier as a first key identifier used for the identity authentication, and the selected first key identifier is deleted from the resource pool of the first key identifier.

In another optional implementation, after one first key identifier is selected from the resource pool of the first key identifier as the first key identifier used for the identity authentication, the selected first key identifier is not deleted.

Step 802: The terminal generates a communication key based on the first key identifier and the first long-term key.

Specifically, the terminal may perform an encryption operation on the first key identifier by using the first long-term key, to obtain the communication key. For example, communication keys are keys symmetric with each other used to perform encryption protection on an SUPI, and EK||MK=KDF (K, KID, SN Name), where EK||MK are the communication keys, K is the first long-term key, KID is the first key identifier, SN Name is a serving network name, and KDF is a key derivation function.

Step 803: The terminal determines a subscription concealed identifier, where the subscription concealed identifier includes a first encrypted ciphertext and the first key identifier, and the first encrypted ciphertext is obtained by encrypting the first subscription permanent identifier of the terminal by using the communication key.

The subscription concealed identifier may be understood as an SUCI, and the first subscription permanent identifier may be understood as the SUPI. This is not specifically limited herein.

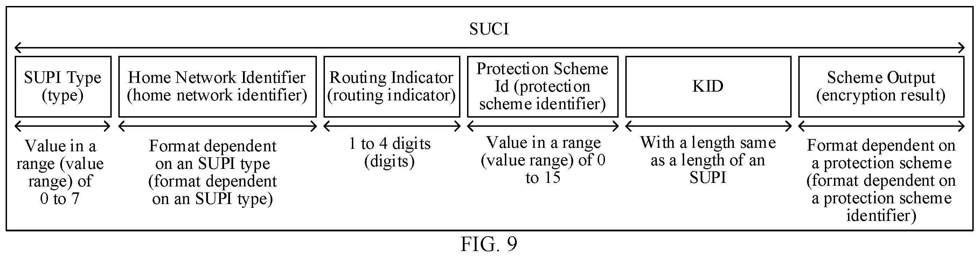

Specifically, if the first key identifier is KID, a construction of the SUCI in this application is shown in FIG. 9. This is equivalent to replacing Home Network Public Key Id in the existing SUCI with KID. The SUPI is encrypted by using the communication key EK to generate a first encrypted ciphertext C, and integrity protection is performed, by using the communication key MK, on the ciphertext generated by encrypting the SUPI, to generate a message authentication code MAC tag value. A scheme out part of the SUCI is a concatenation of the first encrypted ciphertext C and the message authentication code MAC tag value, that is, C||MAC tag value.

Because a symmetric mechanism is used, the scheme out part of the SUCI does not need to transfer a temporary public key, and only the encrypted first encrypted ciphertext and the message authentication code MAC tag value may be sent.

Step 804: The terminal sends the subscription concealed identifier. Correspondingly, the network-side device receives the subscription concealed identifier.

Sending in step 804 may be performed by using a registration request, or may be performed by using an identity authentication request. This is not specifically limited herein.

Step 805: The network-side device determines a second long-term key and a preconfigured second subscription permanent identifier of the terminal based on the first key identifier, where the second long-term key and the first long-term key of the terminal are keys symmetric with each other.

Specifically, the network-side device obtains the first key identifier from the received subscription concealed identifier based on a data structure of the subscription concealed identifier, for example, obtains the first key identifier KID from a position at which the SUCI stores KID. The network-side device (for example, a UDM or an ARPF) may be preconfigured with a correspondence between the first key identifier, the second long-term key, and the preconfigured second subscription permanent identifier of the terminal. After receiving the first key identifier, the network-side device may obtain the second long-term key and the preconfigured second subscription permanent identifier through retrieving based on the first key identifier.

Step 806: The network-side device determines a communication key based on the second long-term key, and decrypts the first encrypted ciphertext by using the communication key, to obtain the first subscription permanent identifier of the terminal.

For a manner of determining the communication key in step 806, refer to step 802 for understanding. Details are not described herein.

Specifically, after the network-side device determines communication keys CK||MK, the network-side device may obtain the first encrypted ciphertext C and the message authentication code MAC tag value from the received subscription concealed identifier based on the data structure of the subscription concealed identifier. The message authentication code MAC tag value is first verified by using the communication key MK and the first encrypted ciphertext. If the verification succeeds, the first encrypted ciphertext C is decrypted by using the communication key CK, to obtain the first subscription permanent identifier of the terminal. The MAC tag value may be verified in the following manner: Performing MAC calculation on the first encrypted ciphertext C by using the communication key MK, to obtain a message authentication code MAC tag value 2, and comparing whether the MAC tag value 2 is the same as the MAC tag value. If the MAC tag value 2 is the same as the MAC tag value, the verification succeeds; or if the MAC tag value 2 is different from the MAC tag value, the verification fails.

Step 807: The network-side device authenticates the terminal based on the first subscription permanent identifier and the second subscription permanent identifier.

Both step 806 and step 807 may be performed by the UDM or the ARPF.

Specifically, if the first subscription permanent identifier is the same as the second subscription permanent identifier, the terminal is successfully authenticated; or if the first subscription permanent identifier is different from the second subscription permanent identifier, the terminal is not successfully authenticated. Specifically, the network-side device may derive the communication keys EK and MK based on the first key identifier, a serving network, and the like, and perform integrity verification on the MAC tag value of the scheme out part by using MK. If the verification on the MAC tag value succeeds, the first encrypted ciphertext is decrypted by using EK, to obtain a decoded SUPI (namely, the first subscription permanent identifier). The network-side device compares whether the decrypted SUPI is consistent with the preconfigured SUPI obtained through retrieving by using the first key identifier in step 805; and if the decrypted SUPI is consistent with the preconfigured SUPI obtained through retrieving by using the first key identifier, the network-side device considers that the identity authentication of the terminal succeeds.

In this application, the terminal generates the communication key based on the first key identifier and the first long-term key, and encrypts, based on the communication key, the first subscription permanent identifier preconfigured in the terminal, to obtain the first encrypted ciphertext. Then, the first encrypted ciphertext and the first key identifier are sent to the network side as content of the subscription concealed identifier, so that the network side determines the second long-term key and can verify the first subscription permanent identifier. In this manner, the terminal and the network side perform encryption and decryption by using the symmetric (same) communication keys, so that data processing complexity of subscription permanent identifier encryption can be reduced.

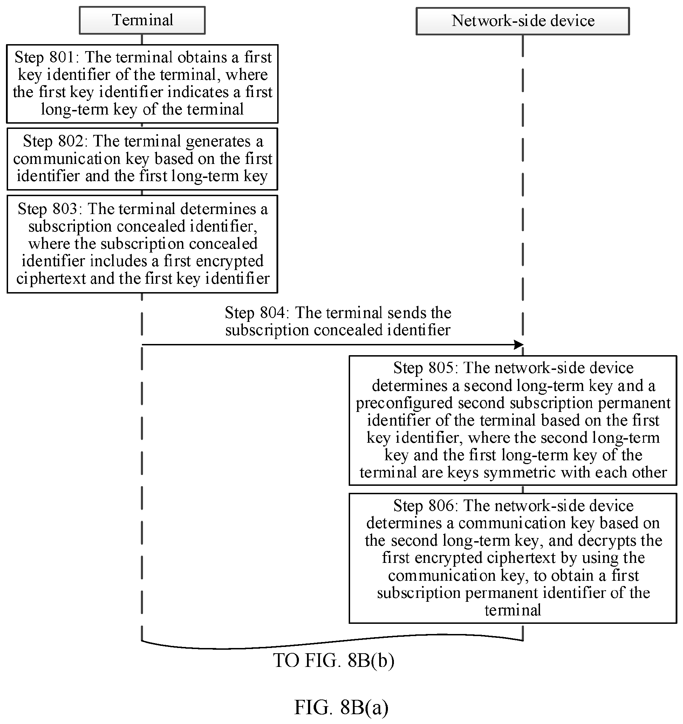

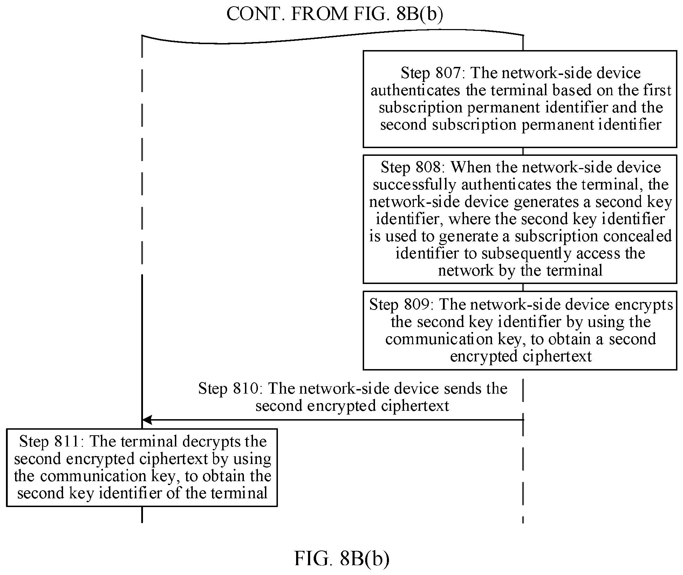

After the network successfully authenticates an identity of the terminal, the first key identifier may be updated, to ensure that the first key identifier in the SUCI varies during the identity authentication of the terminal. Even if the first key identifier is stolen during a specific terminal authentication, the identity of the terminal cannot be obtained, so that security of identity information of the terminal can be ensured. The method may be performed with reference to FIG. 8B(a) and FIG. 8B(b). After step 801 to step 807 are performed, the method further includes the following steps.

Step 808: When the network-side device successfully authenticates the terminal, the network-side device generates a second key identifier, where the second key identifier is used to generate a subscription concealed identifier to subsequently access the network by the terminal.

Specifically, the second key identifier may be a random number generated by a random number generator. Alternatively, the second key identifier may include the random number generated by the random number generator and a dedicated identifier (for example, a PLMN identifier). Alternatively, the network-side device (for example, the UDM) maintains a resource pool of the second key identifier, and each time the network successfully authenticates the terminal, one second key identifier is randomly selected from the resource pool. Alternatively, the network-side device maintains incremental sequence numbers with a fixed length, and each time the network successfully authenticates the terminal, a current sequence number is selected as the second key identifier of the terminal. A manner of generating the second key identifier is not specifically limited herein. Step 808 may be performed by the UDM or the ARPF.

Optionally, the network-side device stores the second key identifier. It should be understood that the second key identifier is an updated first key identifier, for example, is used to generate the subscription concealed identifier to subsequently access the network by the terminal. In other words, the second key identifier is used as the first key identifier in step 801 when the terminal accesses the network next time. Specifically, the UDM may replace the original first key identifier with the second key identifier, or the UDM reserves the original first key identifier, and further stores the second key identifier. This is not limited.

Step 809: The network-side device encrypts the second key identifier by using the communication key, to obtain a second encrypted ciphertext.

If the identity authentication of the terminal succeeds, the second key identifier is generated for the terminal. The UDM or the ARPF may encrypt the second key identifier by using EK, to obtain the second encrypted ciphertext.

Step 810: The network-side device sends the second encrypted ciphertext.

The second encrypted ciphertext in step 810 may be transmitted by the UDM or the ARPF to the terminal via an AUSF and an SEAF. Optionally, the network-side device may further transmit the encrypted ciphertext by using a terminal parameter update procedure. For example, the encrypted ciphertext is transmitted by using a UPU procedure. Specifically, the second encrypted ciphertext is used as UPU data in the UPU procedure.

Optionally, the network-side device may further encrypt and transmit the second key identifier by using the UPU procedure. Specifically, the second key identifier is used as the UPU data in the UPU procedure.

Step 811: The terminal decrypts the second encrypted ciphertext by using the communication key, to obtain the second key identifier of the terminal.

Correspondingly, the terminal may store the second key identifier. It should be understood that the second key identifier is the updated first key identifier, for example, is used to generate the subscription concealed identifier to subsequently access the network by the terminal. In other words, the second key identifier is used as the first key identifier in step 801 when the terminal accesses the network next time. Specifically, the terminal may replace the original first key identifier with the second key identifier, or the terminal reserves the original first key identifier, and further stores the second key identifier. This is not limited.

Optionally, after obtaining the second key identifier by decrypting the second encrypted ciphertext, the terminal may further send, to the network-side device, an acknowledgment message indicating that the terminal has successfully received the second key identifier. After receiving the acknowledgment message, the network-side device may store the second key identifier.

In this application, the terminal may update the first key identifier based on the second key identifier. When subsequently accessing the network, the terminal may determine a communication key based on the second key identifier and the first long-term key, and encrypt the first subscription permanent identifier based on the communication key. The communication key is different from the communication key determined based on the first key identifier and the first long-term key. Based on this, each time the network is accessed, a first encrypted ciphertext encrypted by using a communication key in the subscription concealed identifier varies. Even if the subscription concealed identifier is stolen, identity information of a user cannot be decrypted, thereby ensuring security of the identity information of the user.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

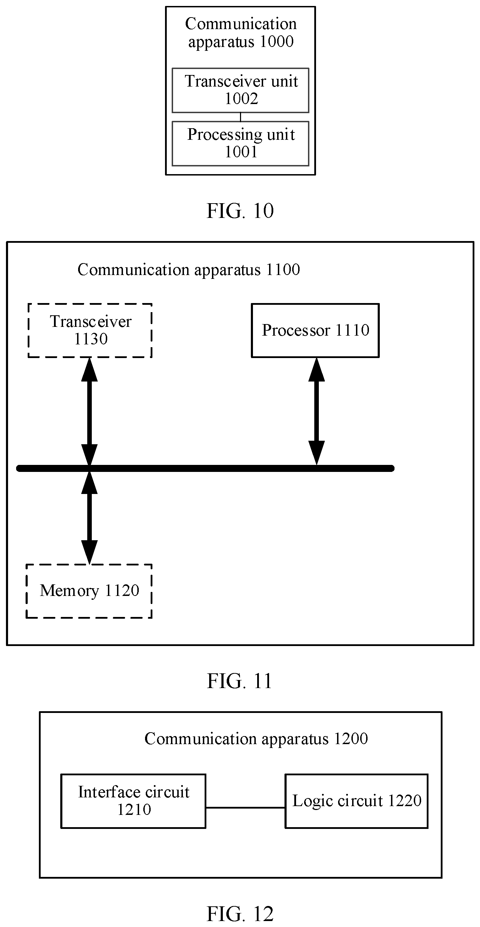

When an integrated unit is used, FIG. 10 is a block diagram of a possible example of a communication apparatus according to an embodiment of this application. As shown in FIG. 10, the communication apparatus 1000 may include a processing unit 1001 and a transceiver unit 1002. The processing unit 1001 is configured to control and manage an action of the communication apparatus 1000. The transceiver unit 1002 is configured to support communication between the communication apparatus 1000 and another device. Optionally, the transceiver unit 1002 may include a receiving unit and/or a sending unit, respectively configured to perform a receiving operation and a sending operation. Optionally, the communication apparatus 1000 may further include a storage unit, configured to store program code and/or data of the communication apparatus 1000. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the terminal or the network-side device, for example, an SEAF, an AUSF, or a UDM. For a specific execution procedure, refer to the descriptions in the foregoing method embodiments. Details are not described herein.

In an embodiment, the communication apparatus 1000 is the terminal. The processing unit 1001 is configured to obtain a first identifier of the terminal and a first long-term key of the terminal. The transceiver unit 1002 is configured to send a first message, where the first message is used to trigger mutual authentication, the first message includes a second identifier, the second identifier is used to determine a second long-term key used to authenticate the terminal in the mutual authentication, the second identifier is determined based on the first identifier, and the second long-term key and the first long-term key are keys symmetric with each other. The transceiver unit 1002 is further configured to receive first authentication data. The processing unit 1001 is further configured to authenticate a network in the mutual authentication based on a random number, the first long-term key, and the first authentication data, where the random number is generated based on the first identifier.

In an optional manner, the transceiver unit 1002 is further configured to receive an encrypted ciphertext. The processing unit 1001 is further configured to decrypt the encrypted ciphertext by using a communication key, to obtain a third identifier of the terminal, where the communication key is derived from the first long-term key, and the third identifier is used to generate a message for subsequently triggering the mutual authentication by the terminal.

In an optional manner, the first message further includes second authentication data for authenticating the terminal.

In an optional manner, the transceiver unit 1002 is further configured to send an acknowledgment message indicating that the terminal has successfully received the third identifier.

In an optional manner, the transceiver unit 1002 is further configured to receive the encrypted ciphertext by using a terminal parameter update procedure.

In an optional manner, the second identifier is determined based on one of the following:
the first identifier; the first identifier and the first long-term key; or the first identifier, the first long-term key, and a count value, where the count value indicates a number of times that the terminal has triggered the mutual authentication.

In an embodiment, the communication apparatus 1000 is the network-side device (for example, the UDM). The transceiver unit 1002 is configured to receive a second identifier of the terminal. The processing unit 1001 is configured to determine, based on the second identifier, a first identifier of the terminal and a second long-term key used to authenticate the terminal in mutual authentication, where the second long-term key and the first long-term key of the terminal are keys symmetric with each other; determine verification data based on the second long-term key and a random number, where the verification data is used to authenticate the terminal in the mutual authentication, and the random number is determined based on the first identifier; and determine, based on the second long-term key and the random number, first authentication data used to authenticate a network in the mutual authentication. The transceiver unit 1002 is further configured to send the first authentication data.

In another embodiment, the communication apparatus 1000 is the terminal. The processing unit 1001 is configured to obtain a first key identifier of the terminal, where the first key identifier indicates a first long-term key of the terminal; generate a communication key based on the first key identifier and the first long-term key; and determine a subscription concealed identifier, where the subscription concealed identifier includes a first encrypted ciphertext and the first key identifier, and the first encrypted ciphertext is obtained by encrypting a first subscription permanent identifier of the terminal by using the communication key. The transceiver unit 1002 is configured to send the subscription concealed identifier.

In an optional manner, the transceiver unit 1002 is further configured to receive a second encrypted ciphertext. The processing unit 1001 is further configured to decrypt the second encrypted ciphertext by using the communication key, to obtain a second key identifier of the terminal, where the second key identifier is used to generate a subscription concealed identifier to subsequently access a network by the terminal.

In an optional manner, the transceiver unit 1002 is further configured to receive the second encrypted ciphertext by using a terminal parameter update procedure.

In still another embodiment, the communication apparatus 1000 is the network-side device (for example, the UDM or the ARPF). The transceiver unit 1002 is configured to receive a subscription concealed identifier of the terminal, where the subscription concealed identifier includes a first encrypted ciphertext and a first key identifier. The processing unit 1001 is configured to determine a second long-term key and a preconfigured second subscription permanent identifier of the terminal based on the first key identifier, where the second long-term key and a first long-term key of the terminal are keys symmetric with each other; decrypt the first encrypted ciphertext based on a communication key, to obtain a first subscription permanent identifier of the terminal, where the communication key is derived from the second long-term key; and authenticate the terminal based on the first subscription permanent identifier and the second subscription permanent identifier.

In an optional manner, the processing unit 1001 is further configured to generate a second key identifier when the terminal is successfully authenticated, where the second key identifier is used to generate a subscription concealed identifier to subsequently access a network by the terminal; and encrypt the second key identifier by using the communication key, to obtain a second encrypted ciphertext. The transceiver unit 1002 is further configured to send the second encrypted ciphertext.

In an optional manner, the processing unit 1001 is configured to store the second key identifier.

In an optional manner, before the processing unit 1001 stores the second key identifier, the transceiver unit 1002 is further configured to receive acknowledgment information indicating that the terminal has successfully received the second key identifier.

In an optional manner, the transceiver unit 1002 is further configured to send the second encrypted ciphertext by using a terminal parameter update procedure.

FIG. 11 shows a communication apparatus 1100 further provided in this application. The communication apparatus 1100 may be a chip or a chip system. The communication apparatus may be located in the device in any one of the foregoing method embodiments, for example, the first terminal or the network device, to perform an action corresponding to the device.

Optionally, the chip system may include a chip, or may include a chip and another discrete component.

The communication apparatus 1100 includes a processor 1110.

The processor 1110 is configured to execute a computer program stored in a memory 1120, to implement an action of each device in any one of the foregoing method embodiments.

The communication apparatus 1100 may further include the memory 1120, configured to store the computer program.

Optionally, the memory 1120 is coupled to the processor 1110. The coupling may be an indirect coupling or a communication connection between apparatuses, units, or modules in an electrical form, a mechanical form, or another form, and is used for information exchange between the apparatuses, the units, or the modules. Optionally, the memory 1120 and the processor 1110 are integrated together.

There may be one or more processors 1110 and one or more memories 1120. This is not limited.

Optionally, during actual application, the communication apparatus 1100 may include or may not include a transceiver 1130. A dashed box is used for illustration in the figure. The communication apparatus 1100 may exchange information with another device through the transceiver 1130. The transceiver 1130 may be a circuit, a bus, or any other apparatus that may be configured to exchange information.

In a possible implementation, the communication apparatus 1100 may be the first terminal or the network device in the foregoing method implementations.

A specific connection medium between the transceiver 1130, the processor 1110, and the memory 1120 is not limited in embodiments of this application. In embodiments of this application, the memory 1120, the processor 1110, and the transceiver 1130 are connected through a bus in FIG. 11. The bus is represented by a bold line in FIG. 11. A manner of connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed and completed by a hardware processor, or may be performed and completed by a combination of hardware and a software module in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 12. An embodiment of this application further provides another communication apparatus 1200, including an interface circuit 1210 and a logic circuit 1220. The interface circuit 1210 may be understood as an input/output interface, and may be configured to perform receiving and sending steps of each device in any one of the foregoing method embodiments. The logic circuit 1220 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application provides a communication system. The communication system includes a device such as the terminal, the UDM, the AUSF, the SEAF, and/or the ARPF mentioned in any one of the foregoing method embodiments, and may be configured to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may be implemented in a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
obtaining a first identifier of a terminal and a first long-term key of the terminal;
sending a first message, wherein the first message is used to trigger mutual authentication, the first message comprises a second identifier of the terminal, the second identifier is used to determine a second long-term key used to authenticate the terminal in the mutual authentication, the second identifier is determined based on the first identifier, and the second long-term key and the first long-term key are keys symmetric with each other;
receiving first authentication data; and
authenticating a network in the mutual authentication based on a random number, the first long-term key, and the first authentication data, wherein the random number is generated based on the first identifier.

2. The method according to claim 1, wherein the first message further comprises second authentication data for authenticating the terminal.

3. The method according to claim 1 or 2, further comprising:
receiving an encrypted ciphertext; and
decrypting the encrypted ciphertext by using a communication key, to obtain a third identifier of the terminal, wherein the communication key is derived from the first long-term key, and the third identifier is used to generate a message for subsequently triggering the mutual authentication by the terminal.

4. The method according to claim 3, further comprising:
sending an acknowledgment message indicating that the terminal has successfully received the third identifier.

5. The method according to claim 3 or 4, wherein the receiving the encrypted ciphertext comprises:
receiving the encrypted ciphertext by using a terminal parameter update procedure.

6. The method according to any one of claims 1 to 5, wherein the second identifier is determined based on one of the following parameter combinations:
the first identifier;
the first identifier and the first long-term key; or
the first identifier, the first long-term key, and a count value, wherein the count value indicates a number of times that the terminal has triggered the mutual authentication.

7. A communication method, comprising:
receiving a second identifier of a terminal;
determining, based on the second identifier, a first identifier of the terminal and a second long-term key used to authenticate the terminal in mutual authentication, wherein the second long-term key and the first long-term key of the terminal are keys symmetric with each other;
determining verification data based on the second long-term key and a random number, wherein the verification data is used to authenticate the terminal in the mutual authentication, and the random number is determined based on the first identifier;
determining, based on the second long-term key and the random number, first authentication data used to authenticate a network in the mutual authentication; and
sending the first authentication data.

8. The method according to claim 7, further comprising:
receiving second authentication data for authenticating the terminal; and
authenticating the terminal based on the verification data and the second authentication data.

9. The method according to claim 8, wherein the receiving the second authentication data for authenticating the terminal comprises: receiving, by an authentication server function, an authentication request message, wherein the authentication request message carries the second authentication data and the second identifier of the terminal;
the method further comprises: storing, by the authentication server function, the second authentication data, and sending the second identifier of the terminal to a unified data management function;
the receiving the second identifier of the terminal comprises: receiving, by the unified data management function, the second identifier of the terminal from the authentication server function;
the determining the first identifier of the terminal and the second long-term key based on the second identifier, and determining the verification data based on the second long-term key and the random number comprises: determining, by the unified data management function, the first identifier of the terminal and the second long-term key based on the second identifier, and determining the verification data based on the second long-term key and the random number;
the method further comprises: sending, by the unified data management function, the verification data to the authentication server function; and
the authenticating the terminal based on the verification data and the second authentication data comprises: authenticating, by the authentication server function, the terminal based on the verification data and the second authentication data.

10. The method according to claim 8, wherein the receiving the second authentication data for authenticating the terminal comprises: receiving, by an authentication server function, an authentication request message, wherein the authentication request message carries the second authentication data and the second identifier of the terminal;
the method further comprises: sending the second identifier of the terminal and the second authentication data to a unified data management function;
the receiving the second identifier of the terminal comprises: receiving, by the unified data management function, the second identifier of the terminal and the second authentication data that are from the authentication server function;
the determining the first identifier of the terminal and the second long-term key based on the second identifier, and determining the verification data based on the second long-term key and the random number comprises: determining, by the unified data management function, the first identifier of the terminal and the second long-term key based on the second identifier, and determining the verification data based on the second long-term key and the random number; and
the authenticating the terminal based on the verification data and the second authentication data comprises: authenticating, by the unified data management function, the terminal based on the verification data and the second authentication data.

11. The method according to claim 9, wherein the determining the first authentication data based on the second long-term key and the random number, and sending the first authentication data comprises: determining, by the unified data management function, the first authentication data based on the second long-term key and the random number, and sending the first authentication data to the terminal via the authentication server function.

12. The method according to any one of claims 7 to 11, further comprising:
receiving, by a security anchor function, a first message, wherein the first message is used to trigger the mutual authentication, and the first message comprises the second identifier of the terminal and the second authentication data; and
sending, by the security anchor function, the authentication request message to the authentication server function.

13. The method according to any one of claims 7 to 12, further comprising:
when the terminal is successfully authenticated, generating a third identifier, wherein the third identifier is used to generate a message for subsequently triggering the mutual authentication by the terminal;
encrypting the third identifier by using a communication key to obtain an encrypted ciphertext, wherein the communication key is derived from the second long-term key; and
sending the encrypted ciphertext.

14. The method according to claim 13, further comprising:
storing the third identifier.

15. The method according to claim 14, wherein before the storing the third identifier, the method further comprises:
receiving acknowledgment information indicating that the terminal has successfully received the third identifier.

16. The method according to any one of claims 13 to 15, wherein the sending the encrypted ciphertext comprises:
sending the encrypted ciphertext by using a terminal parameter update procedure.

17. A communication method, comprising:
obtaining a first key identifier of a terminal, wherein the first key identifier indicates a first long-term key of the terminal;
generating a communication key based on the first key identifier and the first long-term key;
determining a subscription concealed identifier, wherein the subscription concealed identifier comprises a first encrypted ciphertext and the first key identifier, and the first encrypted ciphertext is obtained by encrypting a first subscription permanent identifier of the terminal by using the communication key; and
sending the subscription concealed identifier.

18. The method according to claim 17, further comprising:
receiving a second encrypted ciphertext; and
decrypting the second encrypted ciphertext by using the communication key, to obtain a second key identifier of the terminal, wherein the second key identifier is used to generate a subscription concealed identifier to subsequently access a network by the terminal.

19. The method according to claim 18, further comprising:
sending an acknowledgment message indicating that the terminal has successfully received the second key identifier.

20. The method according to claim 18 or 19, wherein the receiving the second encrypted ciphertext comprises:
receiving the second encrypted ciphertext by using a terminal parameter update procedure.

21. A communication method, comprising:
receiving a subscription concealed identifier of a terminal, wherein the subscription concealed identifier comprises a first encrypted ciphertext and a first key identifier;
determining a second long-term key and a preconfigured second subscription permanent identifier of the terminal based on the first key identifier, wherein the second long-term key and a first long-term key of the terminal are keys symmetric with each other;
decrypting the first encrypted ciphertext based on a communication key, to obtain a first subscription permanent identifier of the terminal, wherein the communication key is derived from the second long-term key; and
authenticating the terminal based on the first subscription permanent identifier and the second subscription permanent identifier.

22. The method according to claim 21, further comprising:
generating a second key identifier when the terminal is successfully authenticated, wherein the second key identifier is used to generate a subscription concealed identifier to subsequently access a network by the terminal;
encrypting the second key identifier by using the communication key, to obtain a second encrypted ciphertext; and
sending the second encrypted ciphertext.

23. The method according to claim 22, further comprising:
storing the second key identifier.

24. The method according to claim 23, wherein before the storing the second key identifier, the method further comprises:
receiving acknowledgment information indicating that the terminal has successfully received the second key identifier.

25. The method according to claim 23, wherein the sending the second encrypted ciphertext comprises:
sending the second encrypted ciphertext by using a terminal parameter update procedure.

26. A communication apparatus, comprising a functional module for implementing the method according to any one of claims 1 to 6, any one of claims 7 to 16, any one of claims 17 to 20, or any one of claims 21 to 25.

27. A communication apparatus, comprising at least one processor and a memory, wherein
the memory is configured to store a computer program or instructions; and
the at least one processor is configured to execute the computer program or the instructions, to cause the method according to any one of claims 1 to 25 to be performed.

28. A chip system, wherein the chip system comprises a processing circuit, wherein the processing circuit is coupled to a storage medium; and
the processing circuit is configured to execute a part or all of a computer program or instructions in the storage medium, and when the part or all of the computer program or the instructions are executed, the processing circuit is configured to implement the method according to any one of claims 1 to 25.

29. A computer-readable storage medium, wherein the computer-readable storage medium stores instructions, and when the instructions are executed by a computer, the method according to any one of claims 1 to 25 is performed.

30. A computer program product comprising a computer program or instructions, wherein when the computer program or the instructions are executed by a computer, the method according to any one of claims 1 to 25 is performed.
